(19) Europäisches Patentamt / European Patent Office / Office européen des brevets

(11) **EP 4 036 741 A1**

(12) **EUROPEAN PATENT APPLICATION**
published in accordance with Art. 153(4) EPC

(43) Date of publication:
**03.08.2022 Bulletin 2022/31**

(21) Application number: **19949260.4**

(22) Date of filing: **17.10.2019**

(51) International Patent Classification (IPC):
**G06F 12/109** (2016.01)        **G06F 12/1072** (2016.01)
**G06F 12/1081** (2016.01)        **G06F 12/1009** (2016.01)

(52) Cooperative Patent Classification (CPC):
**G06F 12/1009; G06F 12/1072; G06F 12/109;**
G06F 12/1081; G06F 2212/1024; G06F 2212/154;
G06F 2212/657

(86) International application number:
**PCT/CN2019/111777**

(87) International publication number:
**WO 2021/072721 (22.04.2021 Gazette 2021/16)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Huawei Technologies Co., Ltd.**
**Longgang District,**
**Shenzhen, Guangdong**
**518129 (CN)**

(72) Inventor: **LIU, Junlong**
**Shenzhen, Guangdong 518129 (CN)**

(74) Representative: **Gill Jennings & Every LLP**
**The Broadgate Tower**
**20 Primrose Street**
**London EC2A 2ES (GB)**

(54) **ADDRESS TRANSLATION METHOD AND APPARATUS**

(57)    An address translation method and apparatus are disclosed, and relate to the computer field, to resolve a problem that a delay of obtaining a page table by a PCIe device is relatively large. The address translation apparatus includes: an interface, configured to receive one address translation request packet from a PCIe device, where the address translation request packet includes a first virtual address and a size of first virtual storage space, and the first virtual address is a virtual start address of the first virtual storage space; and an address translation unit, configured to determine P child page tables of a same size based on the first virtual storage space, where each child page table is used to indicate a mapping relationship from a virtual address to a physical address, a sum of sizes of the P child page tables is equal to the size of the first virtual storage space, P is an integer, and P≥1. The interface is further configured to send one address translation response packet to the PCIe device, where the address translation response packet includes physical start addresses of the P child page tables and the sizes of the P child page tables.

FIG. 5

**Description**

**TECHNICAL FIELD**

Embodiments of this application relate to the computer field, and in particular, to an address translation method and apparatus.

**BACKGROUND**

Before accessing a memory of a processor based on a direct memory access (Direct Memory Access, DMA) protocol, a high-speed serial computer extended bus standard (peripheral component interconnect express, PCIe) device may send an address translation request (Address Translation Service, ATS) packet to the processor, to request the processor to feed back information about a page table corresponding to first virtual storage space. The page table is used to indicate a mapping relationship from a virtual address to a physical address. Therefore, the PCIe device can determine, based on the information about the page table, a physical address corresponding to a virtual address in the first virtual storage space, and access the memory of the processor based on the physical address.

In both a PCIe base specification version (base specification revision) 4.0 and a PCIe base specification version 5.0, processing of an address translation request by the processor is specified as follows: (1) One address translation response packet or two address translation response packets may be used to respond to one address translation request packet. (2) When one address translation response packet includes two or more page tables, sizes of the page tables are the same. It may be understood that address translation may be a process of translating a virtual address in virtual storage space into a physical address in the memory.

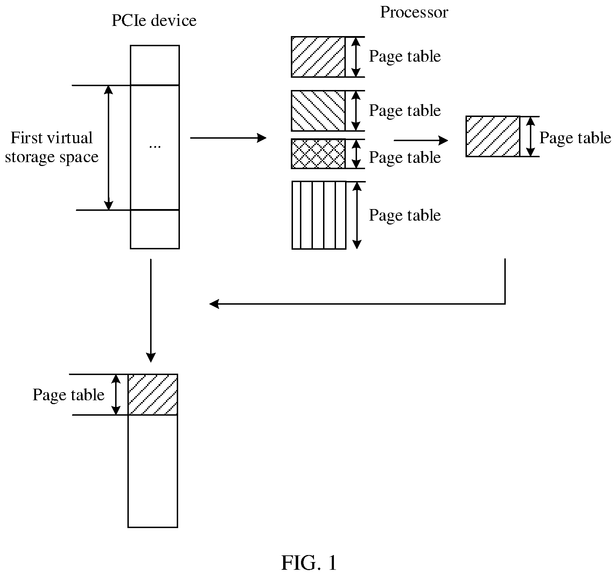

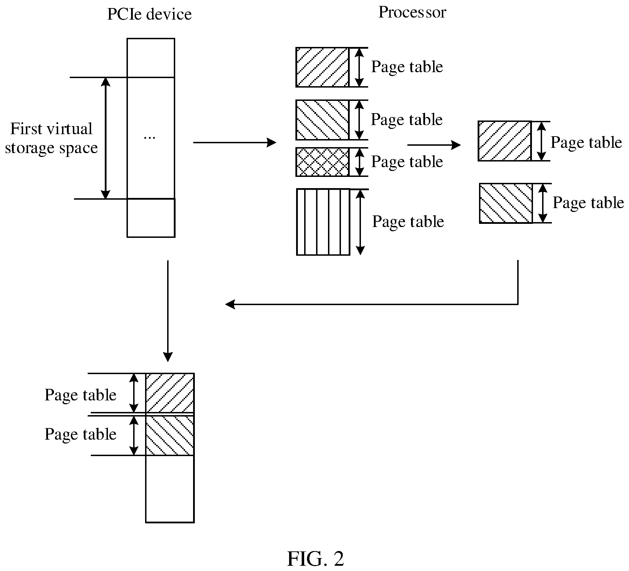

When a size of first virtual storage space that the PCIe device requests to translate is relatively large, and sizes of a plurality of page tables corresponding to the first virtual storage space are different, based on stipulation in a protocol, the processor feeds back information (as shown in FIG. 1) about one page table to the PCIe device, or the processor feeds back information (as shown in FIG. 2) about some page tables (more than one page table but less than all page tables determined by the processor) to the PCIe device. Therefore, a sum of the fed-back sizes of the page tables is less than the size of the first virtual storage space. The processor can feed back only physical addresses corresponding to some virtual addresses in the first virtual storage space, and cannot feed back all information about the plurality of page tables to the PCIe device. The PCIe device needs to send at least two address translation request packets to obtain information about all page tables of the first virtual storage space. Consequently, a delay in requesting a translated address by the PCIe device is relatively large, and bandwidth occupation between the PCIe device and the processor is relatively large.

**SUMMARY**

Embodiments of this application provide an address translation method and apparatus, to resolve a problem that a delay of obtaining a page table by a PCIe device is relatively large.

To achieve the foregoing objective, the following technical solutions are used in embodiments of this application.

According to a first aspect, an address translation apparatus is provided, and the address translation apparatus includes an interface and an address translation unit. The interface is configured to receive one address translation request packet from a PCIe device, where the address translation request packet includes a first virtual address and a size of first virtual storage space, and the first virtual address is a virtual start address of the first virtual storage space. The address translation unit is configured to determine P child page tables of a same size based on the first virtual storage space, where each child page table is used to indicate a mapping relationship from a virtual address to a physical address, a sum of sizes of the P child page tables is equal to the size of the first virtual storage space, P is an integer, and P≥1. The interface is further configured to send one address translation response packet to the PCIe device, where the address translation response packet includes physical start addresses of the P child page tables and the sizes of the P child page tables. The address translation apparatus provided in this embodiment of this application may determine, based on the first virtual storage space, the P child page tables of a same size, where the sum of the sizes of the P child page tables is equal to the size of the first virtual storage space; and feed back the physical start addresses of the P child page tables and the sizes of the P child page tables by using one address translation response packet. Therefore, the PCIe device needs to send only one address translation request packet to obtain, by using one address translation response packet, physical addresses corresponding to all virtual addresses in the first virtual storage space. Therefore, when stipulation in a PCIe base specification is met, a delay in requesting a translated address by the PCIe device and bandwidth occupation between the PCIe device and a processor can be effectively reduced.

In a possible design, the address translation unit is configured to determine the P child page tables of a same size based on the first virtual storage space and a smallest translation unit.

Specifically, the address translation unit is configured to: determine N page tables based on the first virtual address, where the first virtual storage space at least partially overlaps virtual storage space indicated by each of the N page tables, N is an integer, and N2:1; divide the N page tables based on the smallest translation unit, to obtain M child page tables, where all the M child page tables are the same in size, M is an integer, $M \geq 1$, and the first virtual storage space includes at least one smallest translation unit; and determine the P child page tables from the M child page tables, where $1 \leq P \leq M$. Because both the virtual start address of the first virtual storage space and a virtual start address of the page table are aligned with the smallest translation unit, when the first virtual storage space and the page table are divided based on the smallest translation unit, child page tables of a same size that entirely overlap the first virtual storage space may be obtained, so that the processor feeds back, to the PCIe device, the physical addresses corresponding to all the virtual addresses in the first virtual storage space.

In some embodiments, the address translation unit is configured to determine, based on the first virtual address and a size of the page table, N page tables overlapping the first virtual storage space.

For example, a part that is of virtual storage space indicated by an $i^{th}$ page table and that overlaps the first virtual storage space is represented by using the following formula: (p_addr+(s_addr+D*STU)-v_addr) to (p_addr+min(Xi, U)), where p_addr represents a physical start address of the $i^{th}$ page table, s_addr represents the first virtual address, D represents a quantity of smallest translation units included in a part that is of a first page table to an $(i-1)^{th}$ page table and that overlaps the first virtual storage space, STU represents the smallest translation unit, v_addr represents a virtual start address of the $i^{th}$ page table, Xi represents a size of the $i^{th}$ page table, U represents a size of untranslated space in the first virtual storage space, i is an integer, and $i \in [1, N]$.

In another possible design, the physical start addresses of the P child page tables included in one address translation response packet are sorted. Therefore, disorder of the child page tables is avoided, and a case in which the PCIe device determines an incorrect physical address and accesses incorrect physical storage space is avoided.

For example, the physical start addresses of the P child page tables may be sorted based on a virtual address sequence of the first virtual storage space. The virtual address in the first virtual storage space is a virtual address obtained after the first virtual storage space is divided based on the smallest translation unit.

In another possible design, an attribute of a child page table is the same as an attribute of a page table to which the child page table belongs, and the attribute of the child page table or the page table includes an attribute, in a system, of memory space indicated by the child page table or the page table.

According to a second aspect, an address translation method is provided. The method may be applied to a processor, or the method may be applied to a communication apparatus that can support a processor in implementing the method. For example, the communication apparatus includes a chip system. The method includes: receiving one address translation request packet, determining P child page tables of a same size based on first virtual storage space, and sending one address translation response packet, where the address translation response packet includes physical start addresses of the P child page tables and sizes of the P child page tables. The address translation request packet includes a first virtual address and a size of the first virtual storage space, and the first virtual address is a virtual start address of the first virtual storage space. Each child page table is used to indicate a mapping relationship from a virtual address to a physical address, a sum of the sizes of the P child page tables is equal to the size of the first virtual storage space, P is an integer, and $P \geq 1$. Based on the address translation method provided in this embodiment of this application, the processor may determine, based on the first virtual storage space, the P child page tables of a same size, where the sum of the sizes of the P child page tables is equal to the size of the first virtual storage space; and feed back the physical start addresses of the P child page tables and the sizes of the P child page tables by using one address translation response packet. Therefore, a PCIe device needs to send only one address translation request packet to obtain, by using one address translation response packet, physical addresses corresponding to all virtual addresses in the first virtual storage space. Therefore, when stipulation in a PCIe base specification is met, a delay in requesting a translated address by the PCIe device and bandwidth occupation between the PCIe device and the processor can be effectively reduced.

In a possible design, the determining P child page tables of a same size based on first virtual storage space includes: determining the P child page tables of a same size based on the first virtual storage space and a smallest translation unit.

Specifically, the determining the P child page tables of a same size based on the first virtual storage space and a smallest translation unit includes: determining N page tables based on the first virtual address, where the first virtual storage space at least partially overlaps virtual storage space indicated by each of the N page tables, N is an integer, and $N \geq 1$; dividing the N page tables based on the smallest translation unit, to obtain M child page tables, where all the M child page tables are the same in size, M is an integer, $M \geq 1$, and the first virtual storage space includes at least one smallest translation unit; and determining the P child page tables from the M child page tables, where $1 \leq P \leq M$. Because both the virtual start address of the first virtual storage space and a virtual start address of the page table are aligned with the smallest translation unit, when the first virtual storage space and the page table are divided based on the smallest translation unit, child page tables of a same size that entirely overlap the first virtual storage space may be obtained, so that the processor feeds back, to the PCIe device, the physical addresses corresponding to all the virtual addresses in the first virtual storage space.

In some embodiments, the determining N page tables based on the first virtual address includes: determining, based on the first virtual address and a size of the page table, N page tables overlapping the first virtual storage space.

For example, a part that is of virtual storage space indicated by an $i^{th}$ page table and that overlaps the first virtual storage space is represented by using the following formula: (p_addr+(s_addr+D*STU)-v_addr) to (p_addr+min(Xi, U)), where p_addr represents a physical start address of the $i^{th}$ page table, s_addr represents the first virtual address, D represents a quantity of smallest translation units included in a part that is of a first page table to an $(i-1)^{th}$ page table and that overlaps the first virtual storage space, STU represents the smallest translation unit, v_addr represents a virtual start address of the $i^{th}$ page table, Xi represents a size of the $i^{th}$ page table, U represents a size of untranslated space in the first virtual storage space, i is an integer, and $i \in [1, N]$.

In another possible design, the physical start addresses of the P child page tables included in one address translation response packet are sorted. Therefore, disorder of the child page tables is avoided, and a case in which the PCIe device determines an incorrect physical address and accesses incorrect physical storage space is avoided.

For example, the physical start addresses of the P child page tables may be sorted based on a virtual address sequence of the first virtual storage space. The virtual address in the first virtual storage space is a virtual address obtained after the first virtual storage space is divided based on the smallest translation unit.

In another possible design, an attribute of a child page table is the same as an attribute of a page table to which the child page table belongs, and the attribute of the child page table or the page table includes an attribute, in a system, of memory space indicated by the child page table or the page table.

## DESCRIPTION OF DRAWINGS

FIG. 1 is a schematic diagram of page table feedback according to a conventional technology;

FIG. 2 is another schematic diagram of page table feedback according to a conventional technology;

FIG. 3 is a schematic diagram of composition of a PCIe system according to an embodiment of this application;

FIG. 4 is a schematic diagram of composition of another PCIe system according to an embodiment of this application;

FIG. 5 is a flowchart of an address translation method according to an embodiment of this application;

FIG. 6 is a flowchart of another address translation method according to an embodiment of this application;

FIG. 7 is an example diagram of a correspondence between virtual storage space and a page table according to an embodiment of this application;

FIG. 8A and FIG. 8B are a flowchart of still another address translation method according to an embodiment of this application;

FIG. 9 is an example diagram of page table division according to an embodiment of this application;

FIG. 10 is a flowchart of a method for merging P child page tables according to an embodiment of this application;

FIG. 11 is a schematic diagram of an address translation process according to an embodiment of this application;

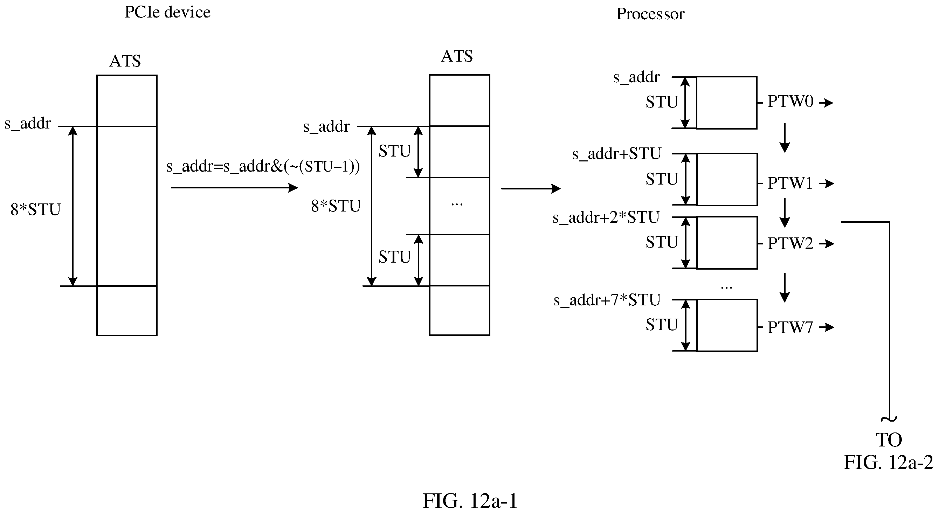

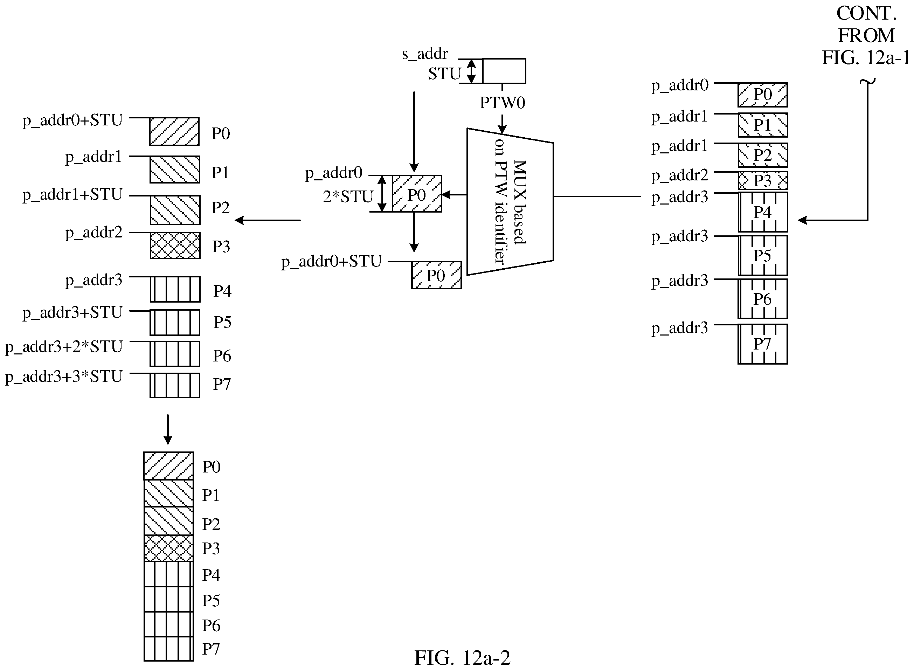

FIG. 12a-1 and FIG. 12a-2 are a schematic diagram of another address translation process according to an embodiment of this application;

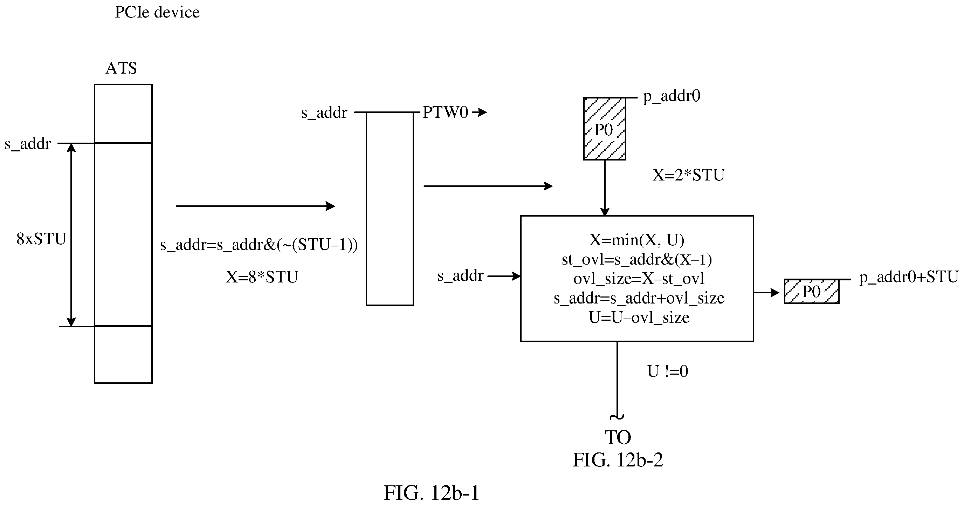

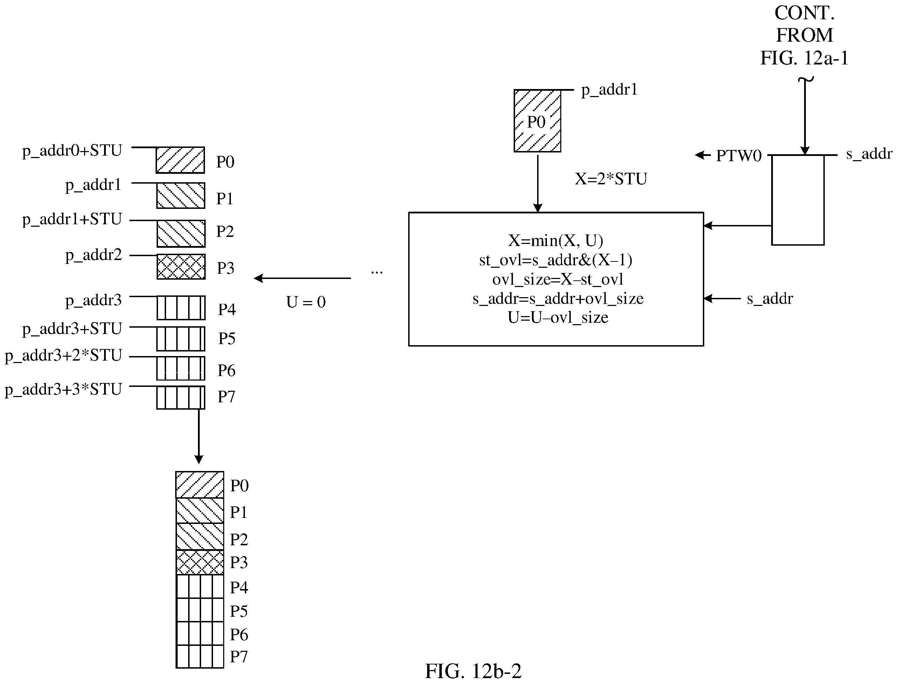

FIG. 12b-1 and FIG. 12b-2 are a schematic diagram of still another address translation process according to an embodiment of this application;

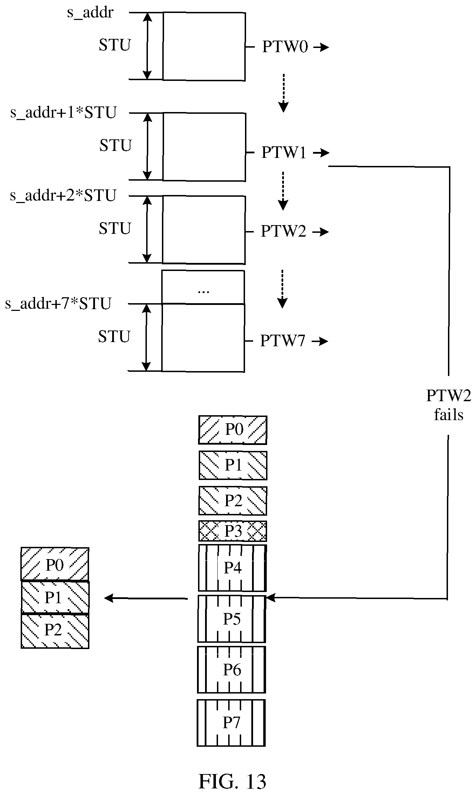

FIG. 13 is a schematic diagram of yet another address translation process according to an embodiment of this application;

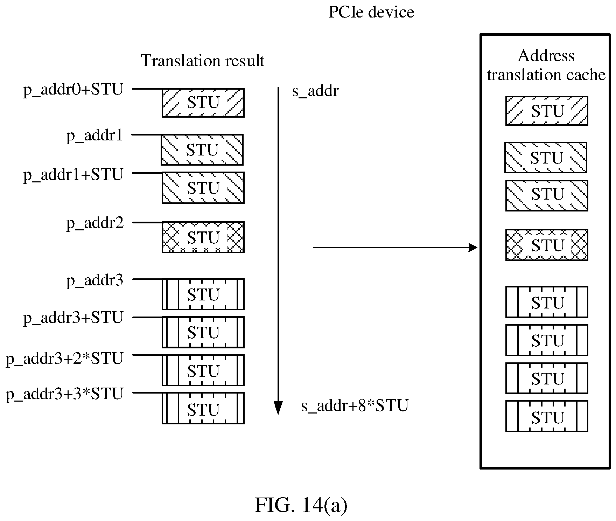

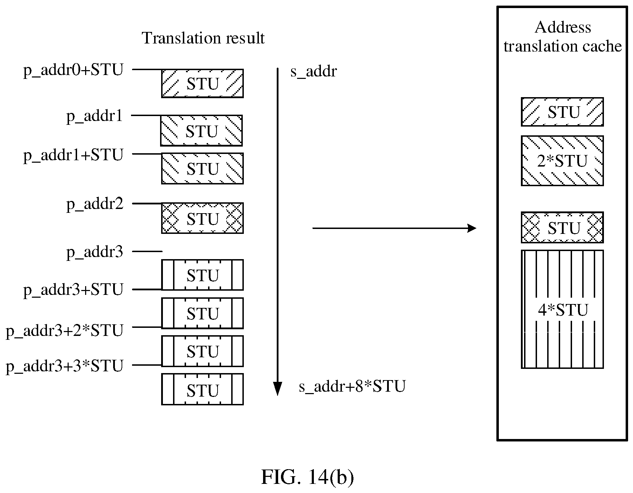

FIG. 14(a) and FIG. 14(b) are a schematic diagram of yet another address translation process according to an embodiment of this application; and

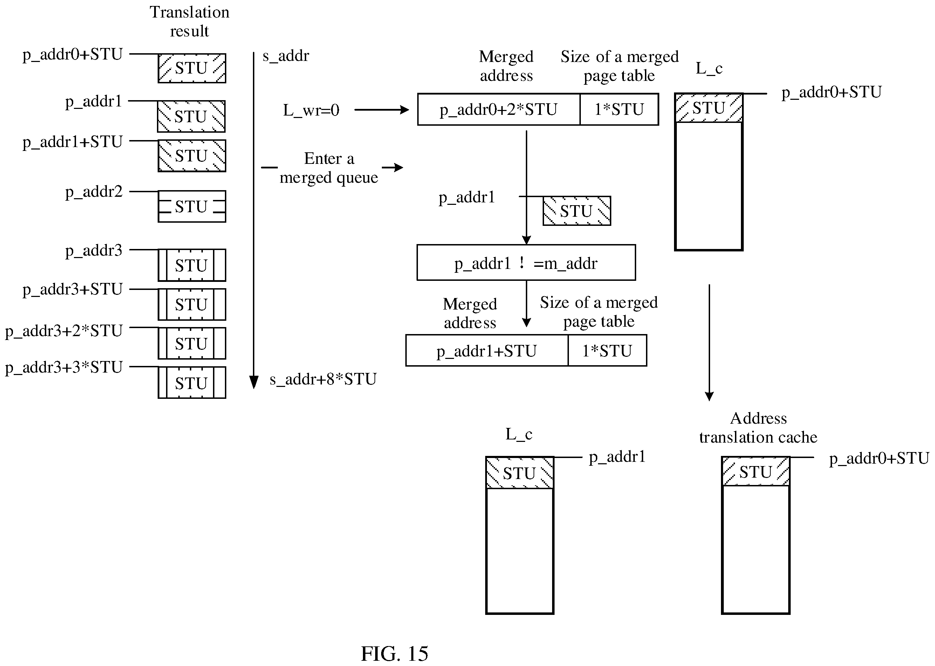

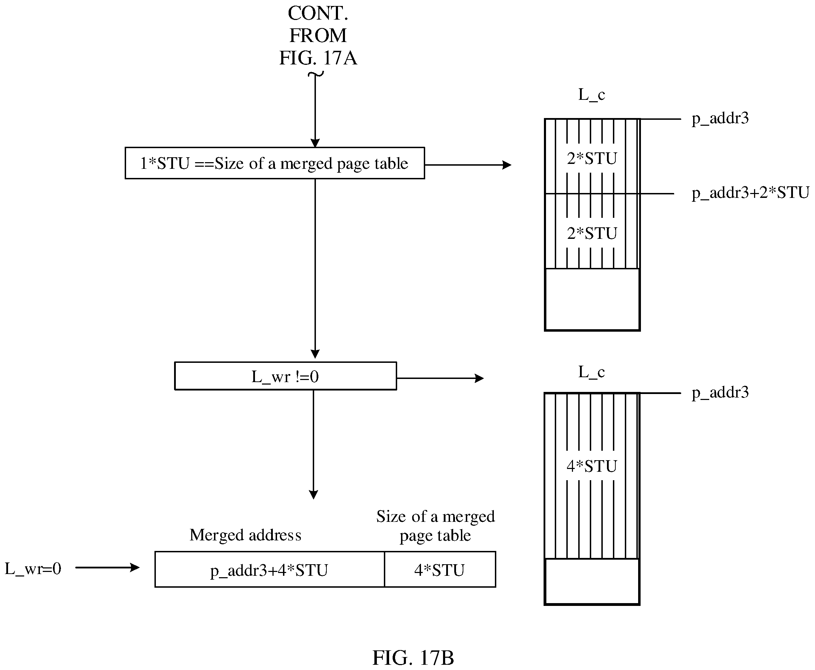

FIG. 15 to FIG. 17A and FIG. 17B are schematic diagrams of a process of merging child page tables according to an embodiment of this application.

## DESCRIPTION OF EMBODIMENTS

In this specification, claims, and accompanying drawings of this application, the terms "first", "second", "third", and the like are intended to distinguish between different objects but do not limit a particular order.

In embodiments of this application, words such as "example" or "for example" are used to represent giving an example, an illustration, or a description. Any embodiment or design scheme described as "example" or "for example" in embodiments of this application should not be explained as being more preferred or having more advantages than another embodiment or design scheme. Exactly, use of the words such as "example" or "for example" is intended to present a relative concept in a specific manner.

For clear and brief description of the following embodiments, a related technology is briefly described first.

Virtual storage space may be a set of virtual addresses generated by a processor. The virtual storage space may also be referred to as virtual address space. A virtual address may also be referred to as a logical address. The virtual address may be an address generated by the processor. The virtual address generated by the processor includes a page number and a page offset. The page number includes a base address of each page in a physical memory. The page number can be used as an index to a page table. The page offset, in combination with the page number, can be used to determine a physical address of a memory.

A size of the virtual storage space may be expressed as an $m^{th}$ power of 2 (for example, $2^m$). A size of the page table may be expressed as an $n^{th}$ power of 2 (for example, $2^n$). High (m-n) bits of the virtual address represent the page number, and low n bits represent the page offset.

Physical address space may be a set of physical addresses in a memory corresponding to the virtual address. The physical address may be an address of the memory.

It should be noted that the processor generates only the virtual address, and considers that virtual storage space of a process is from 0 to a maximum value. The physical address space corresponding to the virtual address in the virtual storage space may include a plurality of segments of physical address sub-space with a relatively small range. The physical address sub-space is not necessarily continuous, and a sum of sizes of all the corresponding physical address sub-space is equal to the size of the virtual storage space. A physical address range corresponding to each piece of physical address sub-space is R+0 to R+size, where R is a base address corresponding to the physical address space. Different physical address sub-space corresponds to different R. The physical address space may also be referred to as physical storage space.

Address mapping is a process of translating a virtual address in the virtual storage space into a physical address in the memory. In some embodiments, for an operation of accessing the memory by a PCIe device, address mapping may be performed by a memory management unit (Memory Management Unit, MMU) in the processor. The PCIe device may be a device that communicates with another device based on a PCIe protocol by using a PCIe bus. In some other embodiments, address mapping may be performed by an I/O memory management unit (I/O Memory Management Unit, IOMMU) for an operation of accessing the memory by an input/output (Input/Output, I/O) device of the processor. In an ARM architecture, the I/O memory management unit is also referred to as a system memory management unit (System Memory Management Unit, SMMU).

A page table is a special data structure, and is stored in a page table area of system space. The page table is a translation relationship table used to translate a virtual address into a physical address. When accessing a virtual address, a computer finds a corresponding physical address by using the page table for access. Therefore, the page table indicates a correspondence between a virtual address and a physical address.

To resolve a problem of a relatively large delay in requesting a translated address by the PCIe device and relatively large bandwidth occupation between the PCIe device and the processor, an embodiment of this application provides an address translation method. The method includes: after receiving one address translation request packet, determining P child page tables of a same size based on first virtual storage space, and sending one address translation response packet, where the address translation response packet includes physical start addresses of the P child page tables and sizes of the P child page tables. The address translation request packet includes a first virtual address and a size of the first virtual storage space, and the first virtual address is a virtual start address of the first virtual storage space. Each child page table is used to indicate a mapping relationship from a virtual address to a physical address, a sum of the sizes of the P child page tables is equal to the size of the first virtual storage space, P is an integer, and P≥1.

Generally, P is a positive integer greater than 1; in other words, a plurality of child page tables of a same size are determined. Certainly, a case in which P is equal to 1 is not excluded in this application. Based on the address translation method provided in this embodiment of this application, the processor may determine, based on the first virtual storage space, the P child page tables of a same size, where the sum of the sizes of the P child page tables is equal to the size of the first virtual storage space; and feed back the physical start addresses of the P child page tables and the sizes of the P child page tables by using one address translation response packet. Therefore, the PCIe device needs to send only one address translation request packet to obtain, by using one address translation response packet, physical addresses corresponding to all virtual addresses in the first virtual storage space. Therefore, when stipulation in a PCIe base specification is met, a delay in requesting a translated address by the PCIe device and bandwidth occupation between the PCIe device and the processor can be effectively reduced.

The following describes implementations of embodiments of this application in detail with reference to the accompanying drawings.

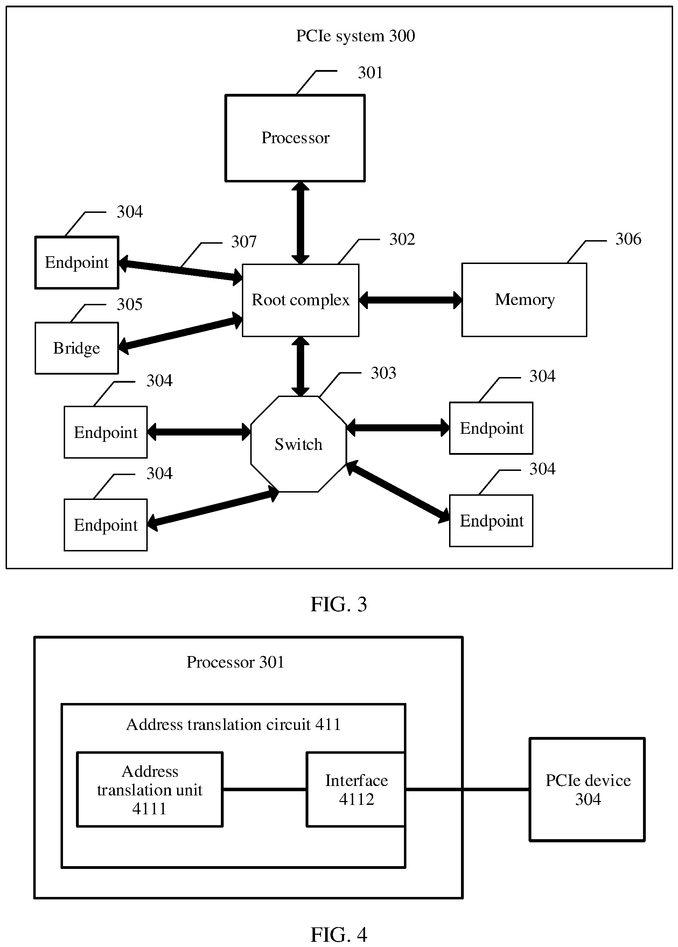

FIG. 3 is a schematic diagram of composition of a PCIe system according to an embodiment of this application. As shown in FIG. 3, a PCIe system 300 may include a processor 301, a root complex (Root Complex) 302, a switch (Switch) 303, an endpoint (Endpoint) 304, and a bridge (PCIe bridge) 305.

The root complex 302 is configured to connect the processor 301 and an input/output I/O device. The switch 303 supports peer-to-peer communication between different endpoints 304. The bridge 305 is configured to connect PCIe to another PCI bus standard (such as PCI/PCI-X). The endpoint 304 may be a PCIe endpoint device or a PCIe device, for example, a PCIe interface network interface card device, a serial port card device, or a storage card device. FIG. 3 is merely a schematic diagram. A structure of the shown PCIe system does not constitute a limitation on the PCIe system, and the PCIe system may include more or fewer components than those shown in the figure, or combine some parts, or have different part arrangements. For example, the PCIe system may further include a memory 306 and a PCIe bus 307. A quantity of endpoints and a quantity of processors included in the PCIe system are not limited in this embodiment of this application.

The processor 301 may be a central processing unit (Central Processing Unit, CPU), or may be another general-purpose processor, a digital signal processor (Digital Signal Processor, DSP), an application-specific integrated circuit (Application Specific Integrated Circuit, ASIC), a field programmable gate array (Field Programmable Gate Array) FPGA) or another programmable logic device, a transistor logic device, a hardware component, or any combination thereof. The general-purpose processor may be a microprocessor, or may be any conventional processor. The steps of the methods disclosed with reference to embodiments of this application may be directly performed and completed by a hardware processor, or may be performed and completed by using a combination of hardware and a software module in the processor.

In this embodiment, the processor 301 is configured to: after receiving one address translation request packet, determine P child page tables of a same size based on first virtual storage space, and send one address translation response packet, where the address translation response packet includes physical start addresses of the P child page tables and sizes of the P child page tables. The address translation request packet includes a first virtual address and a size of the first virtual storage space, and the first virtual address is a virtual start address of the first virtual storage space. Each child page table is used to indicate a mapping relationship from a virtual address to a physical address, a sum of the sizes of the P child page tables is equal to the size of the first virtual storage space, P is an integer, and P≥1.

The PCIe device 304 is configured to: send one address translation request packet, receive one address translation response packet, and access, based on the physical start addresses of the P child page tables and the sizes of the P child page tables, physical storage space (for example, the memory 306) corresponding to the first virtual storage space. In some embodiments, the PCIe device may be a network adapter or a graphics processing unit (Graphics Processing Unit, GPU).

FIG. 4 is still another schematic diagram of composition of the PCIe system 300 according to an embodiment of this application. As shown in FIG. 4, the PCIe system 300 may include a processor 301 and a PCIe device 304. The processor 301 is connected to the PCIe device 304. The processor 301 includes an address translation circuit 411. The address translation circuit 411 includes an address translation unit 4111 and an interface 4112. The interface 4112 is configured to implement communication between the processor 301 and the PCIe device. For example, the interface 4112 receives an address translation request packet and sends an address translation response packet. The address translation unit 4111 is configured to translate a virtual address into a physical address. Actually, the address translation unit 4111 is also a circuit module.

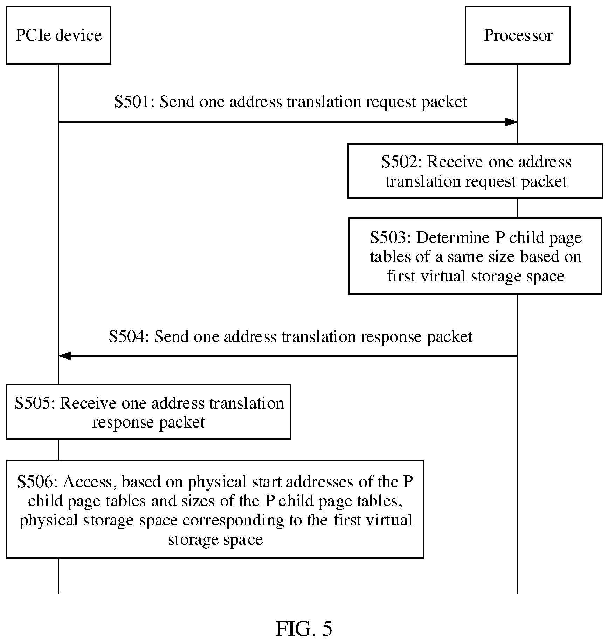

Next, a process of translating an address is described in detail. FIG. 5 is a flowchart of an address translation method according to an embodiment of this application. Herein, an example in which a PCIe device requests a page table corresponding to first virtual storage space from a processor is used for description. The page table corresponding to the first virtual storage space may be used to indicate a physical address of physical space corresponding to the first virtual storage space. As shown in FIG. 5, the method may include the following steps:

S501: The PCIe device sends one address translation request packet to the processor.

The address translation request is used to request the physical address of the physical space corresponding to the first virtual storage space. For example, the physical space corresponding to the first virtual storage space may be storage space of a memory. The first virtual storage space is a segment of continuous virtual storage space.

In some embodiments, the one address translation request packet includes a first virtual address and a size of the first virtual storage space. The first virtual address is a virtual start address of the first virtual storage space. It should be understood that the first virtual address is an untranslated start address in the first virtual storage space that the PCIe device requests to translate.

In some other embodiments, the first virtual storage space includes at least one smallest translation unit (Smallest Translation Unit, STU). The size of the first virtual storage space may be represented by using the smallest translation unit. The virtual start address of the first virtual storage space is aligned with the smallest translation unit. For example, the first virtual storage space includes K smallest translation units. A range of the first virtual storage space may be represented as s_addr to s_addr+K*STU, where s_addr represents the virtual start address of the first virtual storage space, s_addr+K*STU represents a virtual end address of the first virtual storage space, STU represents a size of the smallest translation unit, and * represents a multiplication operation. For example, the size of the smallest translation unit may be 4 kilobytes (kilobyte, KB).

The smallest translation unit is a size, defined in a PCIe protocol, of smallest space that indicates address translation conversion. A unit of the smallest translation unit is byte (Byte). A host may set a specific value of the smallest translation unit, and notify the PCIe device of the value by configuring a bit corresponding to a register in configuration space of the PCIe device. In one computer system, the value is determined by a system architecture. Generally, the system sets the value to a smallest granularity of a page table of the system. Based on a convention of the smallest translation unit, in a PCI Express bus, the smallest translation space is determined for address translation between the host and the PCIe device, and a size of translation address space corresponding to a translation request length is also determined. A detailed calculation formula is specified in a PCI Express protocol for determining the value.

S502: The processor receives one address translation request packet.

The address translation request packet includes the first virtual address and the size of the first virtual storage space. Refer to the description of S501 for details. Details are not described again.

S503: The processor determines P child page tables of a same size based on the first virtual storage space.

In some embodiments, the processor may first obtain N page tables corresponding to the first virtual storage space, and then divide the N page tables based on the smallest translation unit, to obtain the P child page tables of a same size, where N is an integer, and N≥1. Sizes of the N page tables are not necessarily the same. The N page tables are not necessarily continuous.

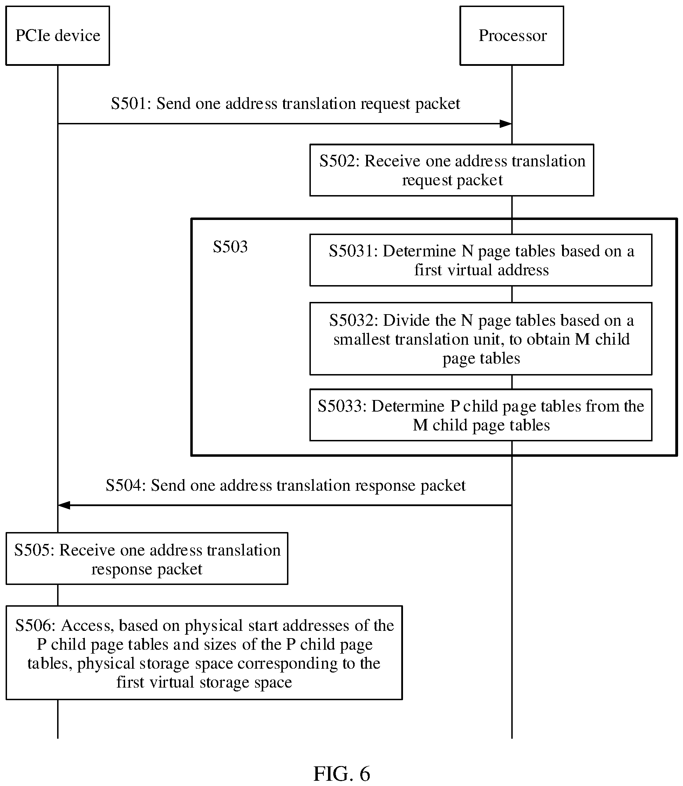

The following describes in detail a process of obtaining the P child page tables of a same size from the N page tables. As shown in FIG. 6, the process of obtaining the P child page tables of a same size from the N page tables specifically includes S5031 to S5033.

S5031: The processor determines the N page tables based on the first virtual address.

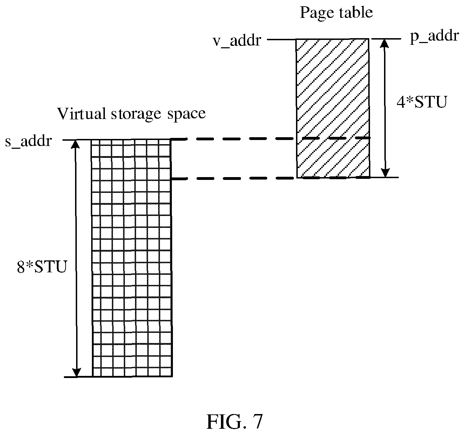

It may be understood that the address translation request is used to request information about the N page tables corresponding to the first virtual storage space. The first virtual storage space at least partially overlaps virtual storage space indicated by each of the N page tables. That the first virtual storage space at least partially overlaps virtual storage space indicated by each of the N page tables may also be replaced with that the first virtual storage space at least partially overlaps (overlap) virtual storage space indicated by each of the N page tables. For example, FIG. 7 is an example diagram of a correspondence between virtual storage space and a page table according to an embodiment of this application. Virtual storage space indicated by one page table partially overlaps the virtual storage space.

A physical start address of the page table is aligned with a size of the page table (page size). A range of the virtual storage space indicated by the page table may be represented as v_addr to v_addr+X. v_addr represents the virtual start address of the page table, and is aligned with the size of the page table. v_addr+X represents a virtual end address of the page table, and X represents the size of the page table.

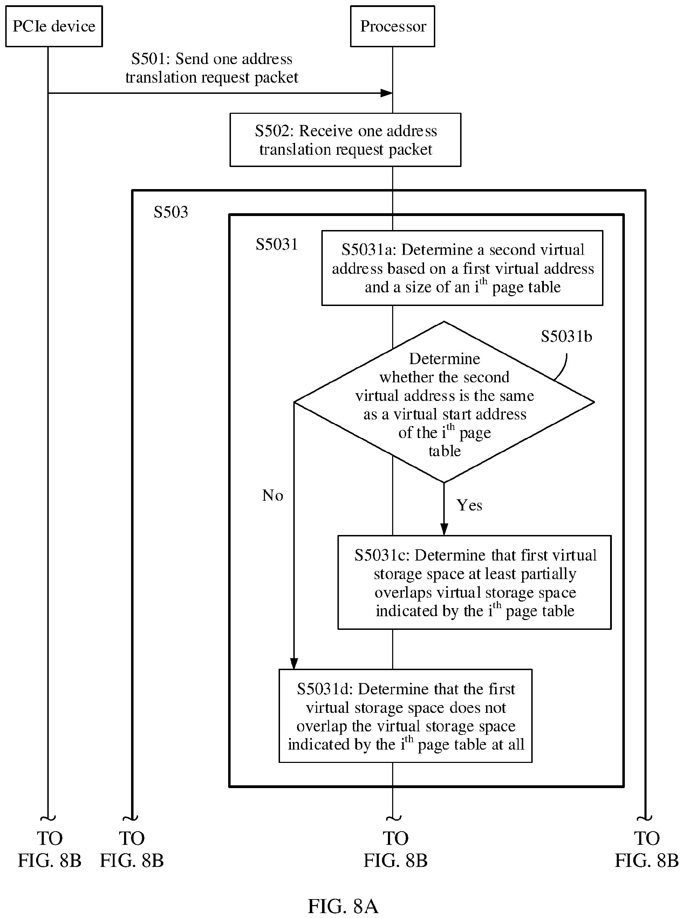

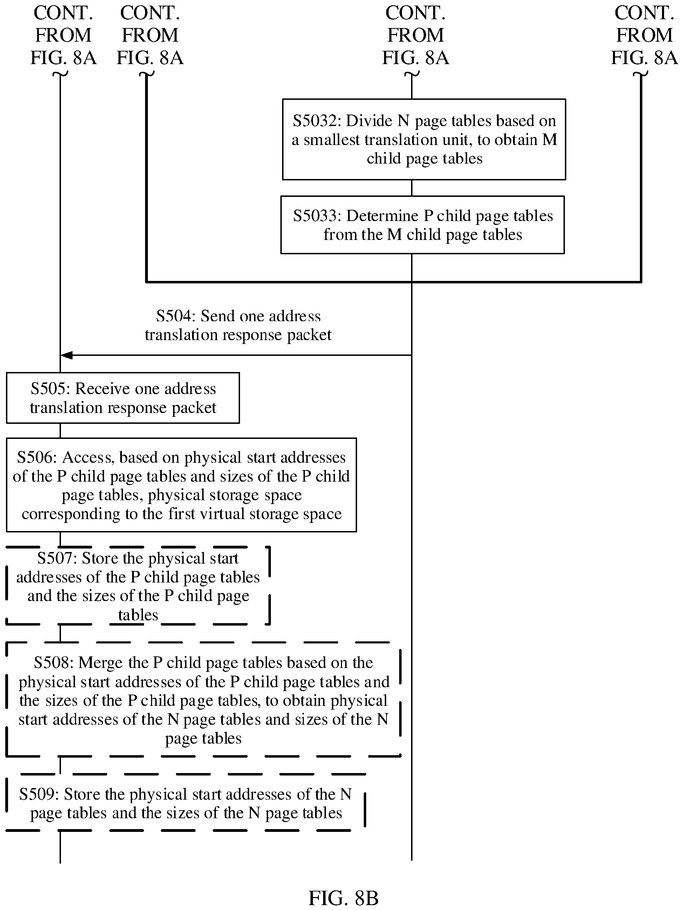

In some embodiments, the processor may perform page table walk (Page Table Walk, PTW), and determine, based on the first virtual address and the size of the page table, the N page tables corresponding to the first virtual storage space. The sizes of the N page tables are not necessarily the same. FIG. 8A and FIG. 8B show a specific method for determining a page table. The following uses an $i^{th}$ page table as an example for detailed description. i is an integer, and $i \in [1, N]$. To be specific, the $i^{th}$ page table is any page table in the N page tables.

S5031a: The processor determines a second virtual address based on the first virtual address and a size of the $i^{th}$ page table.

In some embodiments, the second virtual address is determined by using the following formula (1):

$$v\_addr'=(s\_addr+D*STU)\&(\sim(Xi-1)) \tag{1}$$

v_addr' represents the second virtual address, s_addr represents the first virtual address, D represents a quantity of STUs included in a part that is of a first page table to an $(i-1)^{th}$ page table and that overlaps the first virtual storage space, Xi represents the size of the $i^{th}$ page table, & represents bitwise logical AND, and ~ represents bitwise inversion.

S5031b: The processor determines whether the second virtual address is the same as a virtual start address of the $i^{th}$ page table.

If the second virtual address is the same as the virtual start address of the $i^{th}$ page table, S5031c is performed; or if the second virtual address is different from the virtual start address of the $i^{th}$ page table, S5031d is performed.

S5031c: The processor determines that the first virtual storage space at least partially overlaps virtual storage space indicated by the $i^{th}$ page table.

In this embodiment, after determining that the first virtual storage space at least partially overlaps the virtual storage space indicated by the $i^{th}$ page table, the processor needs to feed back some page tables that are in the $i^{th}$ page table and that overlaps the first virtual storage space.

In some embodiments, a part that is of the virtual storage space indicated by the $i^{th}$ page table and that overlaps the first virtual storage space may be represented by using the following formula (2):

$$(p\_addr+(s\_addr+D*STU)-v\_addr) \text{ to } (p\_addr+min(Xi, U)) \tag{2}$$

p_addr represents a physical start address of the $i^{th}$ page table, v_addr represents a virtual start address of the $i^{th}$ page table, Xi represents the size of the $i^{th}$ page table, U represents a size of untranslated space in the first virtual storage space.

If the processor determines that the first virtual storage space completely overlaps the virtual storage space indicated by the $i^{th}$ page table, the processor needs to feed back the $i^{th}$ page table.

S5031d: The processor determines that the first virtual storage space does not overlap the virtual storage space indicated by the $i^{th}$ page table at all.

In this embodiment, after the processor determines that the first virtual storage space does not overlap the virtual storage space indicated by the $i^{th}$ page table at all, the processor may determine that the $i^{th}$ page table is not a page table corresponding to the first virtual storage space, and does not need to feed back information about the $i^{th}$ page table.

Because a sum of sizes of physical address space corresponding to the N page tables is greater than or equal to the size of the first virtual storage space, physical address sub-space that overlaps the first virtual storage space needs to be selected from the N page tables. After the processor determines, based on the first virtual address, the N page tables corresponding to the first virtual storage space, the processor determines the P child page tables from the N page tables.

Sizes of all child page tables in the P child page tables are the same. A sum of the sizes of the P child page tables is equal to the size of the first virtual storage space. One child page table is used to indicate some or all of a mapping relationship from a virtual address to a physical address in the page table. It should be understood that virtual storage space indicated by the P child page tables completely overlaps the first virtual storage space. The P child page tables are obtained from the N page tables, and the P child page tables may not exist as one page table in an MMU/IOMMU (the P child page tables are generated based on real N physical page tables in this application). However, the physical address space corresponding to the P page tables definitely belongs to the physical address space corresponding to the N page tables. P is an integer, and P≥1.

In some embodiments, the size of the page table may be a multiple of the smallest translation unit. For example, the size of the page table is a power of 2. The processor may divide the N page tables based on the smallest translation unit, and determine the P child page tables. That the processor determines the P child page tables from the N page tables specifically includes the following steps:

S5032: The processor divides the N page tables based on the smallest translation unit, to obtain M child page tables.

In some embodiments, for each of the N page tables, the processor may equally divide the page table based on the smallest translation unit. The processor equally divides the N page tables based on the smallest translation unit to obtain the M child page tables, where M is an integer, and M≥1. The M child page tables are the same in size. For example, the size of the child page table is equal to the size of the smallest translation unit.

In some embodiments, a virtual start address of an $s^{th}$ child page table may be represented as v_addr+(s-1)*STU, where v_addr represents a virtual start address of a page table to which the $s^{th}$ child page table belongs, s is an integer, and s∈[1, M].

A physical start address of the $s^{th}$ child page table may be represented as p_addr+(s-1)*STU, where p_addr represents a physical start address of the page table to which the $s^{th}$ child page table belongs, s is an integer, and s∈[1, M].

For example, when s=1, it indicates a first child page table. A virtual start address corresponding to the first child page table is v_addr+(1-1)*STU, and a physical start address corresponding to the first child page table is p_addr+(1-1)*STU.

For another example, when s=2, it indicates a second child page table. A virtual start address corresponding to the second child page table is v_addr+(2-1)*STU, and a physical start address corresponding to the first child page table is p_addr+(2-1)*STU.

For another example, when s=3, it indicates a third child page table. A virtual start address corresponding to the third child page table is v_addr+(3-1)*STU, and a physical start address corresponding to the first child page table is p_addr+(3-1)*STU.

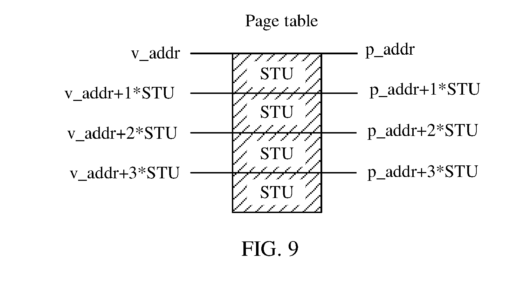

For example, FIG. 9 is an example diagram of page table division according to an embodiment. It is assumed that a page table includes four smallest translation units. The page table is equally divided based on the smallest translation units, to obtain four child page tables.

A virtual start address of a first child page table is a virtual start address of a page table to which the first child page table belongs, and may be represented as v_addr. A physical start address of the first child page table is a physical start address of the page table to which the first child page table belongs, and may be represented as p_addr.

A virtual start address of a second child page table is a virtual end address of the first child page table, and may be represented as v_addr+1*STU. A physical start address of the second child page table is a physical end address of the first child page table, and may be represented as p_addr+1*STU.

A virtual start address of a third child page table is a virtual end address of the second child page table, and may be represented as v_addr+2*STU. A physical start address of the third child page table is a physical end address of the second child page table, and may be represented as p_addr+2*STU.

A virtual start address of a fourth child page table is a virtual end address of the third child page table, and may be represented as v_addr+3*STU. A physical start address of the fourth child page table is a physical end address of the third child page table, and may be represented as p_addr+3*STU.

S5033: The processor determines the P child page tables from the M child page tables.

In some embodiments, the first virtual storage space includes at least one smallest translation unit. The virtual start address of the first virtual storage space is aligned with the smallest translation unit. The processor may divide the first virtual storage space based on the smallest translation unit, and determine P address translation units; compare a virtual start address of each of the M child page tables with a virtual start address corresponding to each of the P address translation units, and if the virtual start address of the child page table is the same as the virtual start address corresponding to the address translation unit, determine that virtual storage space indicated by the child page table entirely overlaps virtual storage space corresponding to the address translation unit, and determine that the child page table is a child page table that needs to be fed back. Therefore, through traversing of the M child page tables, a child page table overlapping the first virtual storage space is determined from the M child page tables until a sum of sizes of determined child page tables is equal to the size of the first virtual storage space.

In some embodiments, the virtual start address corresponding to the address translation unit may be represented as s_addr+(P-1)*STU, where s_addr represents the virtual start address of the first virtual storage space.

For example, when P=1, it indicates a first address translation unit, and a virtual start address corresponding to the first address translation unit is s_addr+(1-1)*STU.

For another example, when P=2, it indicates a second address translation unit, and a virtual start address corresponding to the second address translation unit is s_addr+(2-1)*STU.

For another example, when P=3, it indicates a third address translation unit, and a virtual start address corresponding to the third address translation unit is s_addr+(3-1)*STU.

For example, if the virtual start address v_addr+(1-1)*STU corresponding to the first child page table is equal to the virtual start address s_addr+(1-1)*STU corresponding to the first address translation unit, it is determined that virtual storage space indicated by the first child page table entirely overlaps virtual storage space corresponding to the first address translation unit, and the first child page table is a child page table that needs to be fed back.

In some other embodiments, if the virtual start address of the first virtual storage space is not aligned with the smallest translation unit, the virtual start address of the first virtual storage space is first aligned with the smallest translation unit, and then the first virtual storage space is divided based on the smallest translation unit.

In some other embodiments, page table attributes such as read/write permissions of child page tables belonging to a same page table are the same as a page table attribute of the page table to which the child page tables belong.

In some other embodiments, because the processor does not obtain some page tables corresponding to the first virtual storage space, the processor cannot obtain some physical addresses corresponding to the virtual address in the first virtual storage space. Therefore, the sum of the sizes of the P child page tables is less than the size of the first virtual storage space. It should be understood that, the virtual storage space indicated by the P child page tables partially overlaps the first virtual storage space.

S504: The processor sends one address translation response packet to the PCIe device.

The address translation response packet includes physical start addresses of the P child page tables and the sizes of the P child page tables. Each of the physical start addresses of the P child page tables is used to indicate a physical start address of one child page table. In some embodiments, the address translation response packet may further include attributes of the P child page tables. An attribute of the child page table is the same as an attribute of a page table to which the child page table belongs. The attribute of the child page table or the page table includes an attribute, in a system, of memory space indicated by the child page table or the page table. The attribute of the page table includes but is not limited to a read/write permission attribute, a global page table attribute, an attribute in which a physical address cannot be used, and the like. The read/write permission attribute is used to indicate a read permission and a write permission, in the system, of the memory space indicated by the page table. The global page table attribute is used to indicate that the memory space indicated by the page table is globally available in the system. The attribute in which a physical address cannot be used is used to indicate that an untrusted device cannot access the memory space indicated by the page table. In some other embodiments, another attribute may be further included, and details are not described.

It should be noted that, it is further specified in a PCIe base specification version 4.0 and a PCIe base specification version 5.0 that when one address translation response packet includes a plurality of page tables, a sequence of the plurality of page tables is determined based on a sequence of virtual addresses in virtual storage space that are requested to translate. Therefore, the physical start addresses of the P child page tables included in the address translation response packet are sorted. For example, the physical start addresses of the P child page tables are sorted based on a virtual address sequence of the first virtual storage space. Therefore, disorder of the child page tables is avoided, and a case in which the PCIe device determines an incorrect physical address and accesses incorrect physical storage space is avoided.

In some embodiments, after the processor receives the address translation request packet, the processor may divide the first virtual storage space based on the smallest translation unit to obtain P address translation request units. Because the first virtual storage space is in a logical sequence relationship, the P address translation units are also in a virtual address sequence relationship of the first virtual storage space. The address sequence relationship may be a relationship of descending order of virtual addresses. The P address translation units may be sorted in descending order of virtual addresses in the first virtual storage space.

The processor may set identifiers of the P address translation request units based on the virtual address sequence of the first virtual storage space. The identifiers of the P address translation request units may be sorted in descending order of the virtual addresses in the first virtual storage space. Therefore, the processor may sort the physical start addresses of the P child page tables based on an identifier sequence of the P address translation request units. In some embodiments, the identifiers of the P address translation request units may be set in a packet header of the address translation response packet.

For example, it is assumed that P=3, to represent that the processor determines three child page tables. A first physical address is a physical start address of a first child page table. A second physical address is a physical start address of a second child page table. A third physical address is a physical start address of a third child page table. The processor sorts the first physical address, the second physical address, and the third physical address based on the virtual address sequence of the first virtual storage space.

In some embodiments, the physical addresses may be sorted first, and then sizes of the child page tables are sorted. For example, the first physical address, the second physical address, the third physical address, a size of the first child page table, a size of the second child page table, and a size of the third child page table are sorted sequentially. In this case, the size of the first child page table is a size of a child page table corresponding to the first physical address; the size of the second child page table is a size of a child page table corresponding to the second physical address; and the size of the third child page table is a size of a child page table corresponding to the third physical address.

In some other embodiments, the physical addresses and sizes of the child page tables may be cross-ordered. For example, the first physical address, a size of the first child page table, the second physical address, a size of the second child page table, the third physical address, and a size of the third child page table are sorted sequentially. In this case, the size of the first child page table is a size of a child page table corresponding to the first physical address; the size of the second child page table is a size of a child page table corresponding to the second physical address; and the size of the third child page table is a size of a child page table corresponding to the third physical address.

S505: The PCIe device receives one address translation response packet.

The address translation response packet includes a translation result. The translation result includes the physical start addresses of the P child page tables, the sizes of the P child page tables, attributes of the P child page tables, and the like. The P child page tables are the same in size, a sum of the sizes of the P child page tables is equal to the size of the first virtual storage space, P is an integer, and P≥1. Refer to the description of S504 for details. Details are not described.

S506: The PCIe device accesses, based on the physical start addresses of the P child page tables and the sizes of the P child page tables, physical storage space corresponding to the first virtual storage space.

The PCIe device establishes a one-to-one mapping relationship from the virtual storage space to the physical storage space based on the received translation result, for example, information such as the first virtual storage space and the physical storage space corresponding to the first virtual storage space, read/write access permissions of related physical storage space, and an attribute of corresponding space. In this way, when the PCIe device initiates access to a memory of the processor, the virtual address may be translated into a locally maintained corresponding physical address, to access the processor, and an address in a PCIe packet sent by the PCIe device to the memory is marked as translated. An attribute corresponding to the address is placed in a prefix (prefix) or another reserved field of the packet.

The PCIe device determines a physical address of the memory based on the physical address of the child page table and an offset address in a corresponding virtual address in the first virtual storage space, and accesses, based on the physical address of the memory and the size of the child page table, the physical storage space corresponding to the first virtual storage space. For a specific method, refer to a conventional technology. Details are not described.

In some embodiments, after receiving the address translation response packet, and parsing the address translation response packet to obtain the physical start addresses of the P child page tables and the sizes of the P child page tables, the PCIe device may directly store the physical start addresses of the P child page tables and the sizes of the P child page tables in a local address translation cache (Address Translation Cache, ATC). A sequence of the physical start addresses of the P child page tables and the sizes of the P child page tables corresponds to a sequence, of the first virtual storage space, from a virtual start address to a virtual end address. When the PCIe device needs to access the physical storage space corresponding to the first virtual storage space, the PCIe device accesses, based on the physical start addresses of the P child page tables and the sizes of the P child page tables, the physical storage space corresponding to the first virtual storage space.

In some other embodiments, the PCIe device may sequentially determine, based on the sequence of the physical start addresses of the P child page tables and the sizes of the P child page tables, child page tables that can be merged into one continuous page table whose size is a power of 2, and cache, in the address translation cache, a physical start address of the page table obtained after merging and a size of the page table obtained after merging; otherwise, the PCIe device directly caches the physical start addresses of the child page tables and the sizes of the child page tables in the address translation cache. The page table obtained after merging includes one child page table or a plurality of child page tables. When the PCIe device needs to access the physical storage space corresponding to the first virtual storage space, the PCIe device accesses, based on the physical start address of the page table obtained after merging and the size of the page table obtained after merging, the physical storage space corresponding to the first virtual storage space.

For example, as shown in FIG. 8A and FIG. 8B, after S506, S507 may be further performed, or S508 and S509 may be further performed.

S507: The PCIe device stores the physical start addresses of the P child page tables and the sizes of the P child page tables.

S508: The PCIe device merges the P child page tables based on the physical start addresses of the P child page tables and the sizes of the P child page tables, to obtain physical start addresses of the N page tables and sizes of the N page tables.

Because the P child page tables are obtained by dividing at least one page table, the PCIe device may merge, based on the physical start addresses of the P child page tables and the sizes of the P child page tables, child page tables belonging to a same page table, to obtain the physical start addresses of the N page tables and the sizes of the N page tables, where N is an integer, and $1 \leq N \leq P$.

S509: The PCIe device stores the physical start addresses of the N page tables and the sizes of the N page tables.

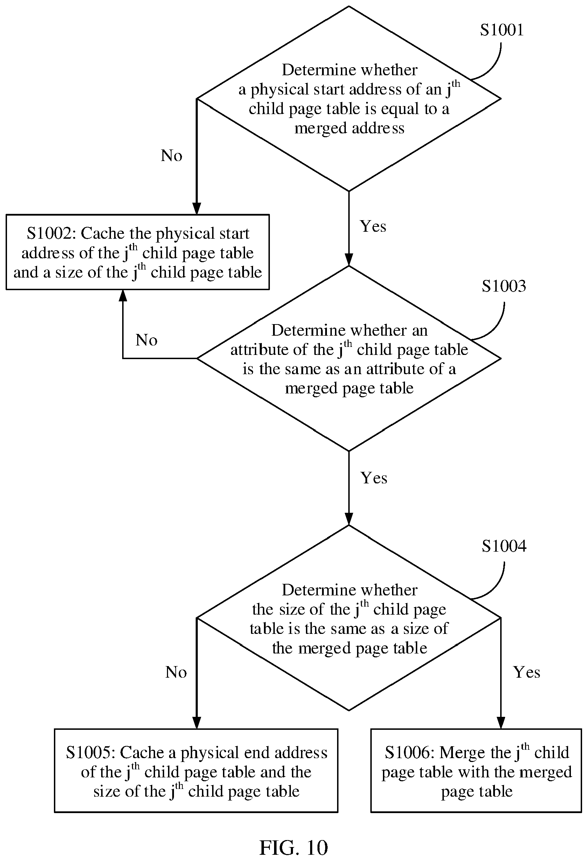

In some embodiments, the P child page tables are traversed, and the P child page tables are merged based on the following method. A $j^{th}$ page table is used as an example below for detailed description, where j is an integer, $j \in [1, P]$, and the $j^{th}$ page table represents any one of the P child page tables. As shown in FIG. 10, a method for merging the P child page tables is specifically described below.

S1001: The PCIe device determines whether a physical start address of the $j^{th}$ child page table is equal to a merged address.

The merged address is used to indicate a physical end address of a merged page table. The merged page table may include at least one child page table.

If the physical start address of the $j^{th}$ child page table is not equal to the merged address, it indicates that the $j^{th}$ child page table and a $(j-1)^{th}$ child page table do not belong to a same page table, and S1002 is performed. If the physical address of the $j^{th}$ child page table is equal to the merged address, S1003 is performed.

S1002: The PCIe device caches the physical start address of the $j^{th}$ child page table and a size of the $j^{th}$ child page table.

In some embodiments, the PCIe device may cache the physical start address of the $j^{th}$ child page table and the size of the $j^{th}$ child page table in an address translation cache.

S1003: The PCIe device determines whether an attribute of the $j^{th}$ child page table is the same as an attribute of the merged page table.

If the attribute of the $j^{th}$ child page table is different from the attribute of the merged page table, it indicates that the $j^{th}$ child page table and a $(j-1)^{th}$ child page table do not belong to a same page table, and S1002 is performed. If the attribute of the $j^{th}$ child page table is the same as the attribute of the merged page table, it indicates that the $j^{th}$ child page table and the $(j-1)^{th}$ child page table belong to a same page table, and S1004 is performed.

S1004: The PCIe device determines whether the size of the $j^{th}$ child page table is the same as a size of the merged page table.

If the size of the $j^{th}$ child page table is different from the size of the merged page table, it indicates that although the $j^{th}$ child page table and the merged page table belong to a same page table, the $j^{th}$ child page table and the merged page table do not meet a power of 2 after being merged, and S1005 is performed. If the size of the $j^{th}$ child page table is the same as the size of the merged page table, it indicates that the $j^{th}$ child page table and the $(j-1)^{th}$ child page table belong to a same page table, and S1006 is performed.

S1005: The PCIe device caches a physical end address of the $j^{th}$ child page table and the size of the $j^{th}$ child page table.

In some embodiments, the PCIe device may first cache the $j^{th}$ child page table in another cache area other than the address translation cache, traverse a $(j+1)^{th}$ child page table, and determine whether the $(j+1)^{th}$ child page table can be merged with the $j^{th}$ child page table. For details, refer to descriptions of S1001 to S1006. Details are not described.

S1006: The PCIe device merges the $j^{th}$ child page table with the merged page table.

In some embodiments, if the $(j+1)^{th}$ child page table and the merged page table cannot be merged, it is determined that the merged page table is a page table obtained after merging, and the PCIe device may cache a physical start address of the merged page table and the size of the merged page table in the address translation cache.

In some embodiments, after merging the jth child page table and the merged page table, the PCIe device updates the merged address and the size of the merged page table, to further determine whether another child page table can be merged.

Based on the address translation method provided in this embodiment of this application, the processor may determine, based on the first virtual storage space, the P child page tables of a same size, where the sum of the sizes of the P child page tables is equal to the size of the first virtual storage space; and feed back the physical start addresses of the P child page tables and the sizes of the P child page tables by using one address translation response packet. Therefore, the PCIe device needs to send only one address translation request packet to obtain, by using one address translation response packet, physical addresses corresponding to all virtual addresses in the first virtual storage space. Therefore, when stipulation in a PCIe base specification is met, a delay in requesting a translated address by the PCIe device and bandwidth occupation between the PCIe device and the processor can be effectively reduced.

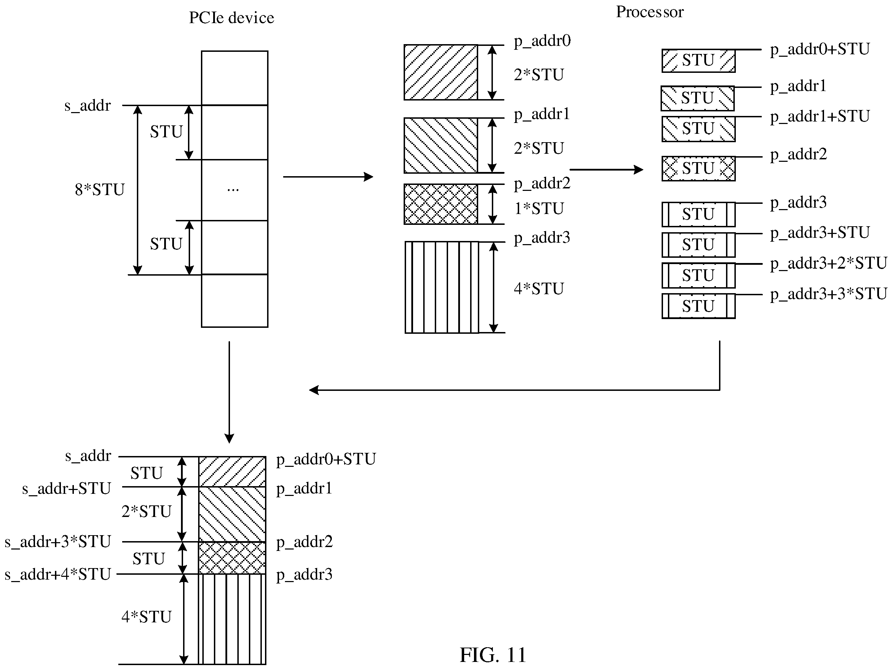

The address translation method is described below with reference to FIG. 11 to FIG. 14(a) and FIG. 14(b) by using examples. As shown in FIG. 11, it is assumed that a size of first virtual storage space is eight smallest translation units. s_addr represents a first virtual start address of the first virtual storage space. A PCIe device sends an address translation request packet to a processor, and the address translation request packet includes a first virtual address and a size of the first virtual storage space.

The processor determines four page tables based on a first virtual address. A physical start address of a first page table is p_addr0, and the first page table includes two STUs; a physical start address of a second page table is p_addr1, and the first page table includes two STUs; a physical start address of a third page table is p_addr2, and the first page table includes one STU; and a physical start address of a fourth page table is p_addr3, and the first page table includes four STUs. A method for determining the page table based on the first virtual address is described in S5031, and details are not described again. The processor divides the four page tables based on the smallest translation unit, to obtain nine child page tables. The first page table is divided into two child page tables whose physical start addresses are separately p_addr0 and p_addr0+STU and virtual start addresses are separately v_addr0 and v_addr0+STU. The second page table is divided into two child page tables whose physical start addresses are separately p_addr1 and p_addr1+STU and virtual start addresses are separately v_addr1 and v_addr1+STU. The third page table is divided into one child page table whose physical start address is p_addr2 and virtual start address is v_addr2. The fourth page table is divided into four child page tables whose physical start addresses are separately p_addr3, p_addr3+STU, p_addr3+2*STU, and p_addr3+3*STU and virtual start addresses are separately v_addr3, v_addr3+STU, v_addr3+2*STU, and v_addr3+3*STU.

The processor may divide the first virtual storage space based on the smallest translation unit, determine eight address translation units, compare a virtual start address of each of the nine child page tables with a virtual start address corresponding to each of the eight address translation units, and if the virtual start address of the child page table is the same as the virtual start address corresponding to the address translation unit, determine that virtual storage space indicated by the child page table entirely overlaps virtual storage space corresponding to the address translation unit, and determine that the child page table is a child page table that needs to be fed back. Therefore, through traversing of the M child page tables, a child page table overlapping the first virtual storage space is determined from the M child page tables until a sum of sizes of determined child page tables is equal to the size of the first virtual storage space. In this embodiment, it is assumed that virtual storage space indicated by eight child page tables in the nine child page tables entirely overlaps the first virtual storage space, Physical start addresses of the eight child page tables are separately p_addr0+STU, p_addr1, p_addr1+STU, p_addr2, p_addr3, p_addr3+STU, p_addr3+2*STU, and p_addr3+3*STU.

The processor sends an address translation response packet, and the address translation response packet includes the physical start addresses of the eight child page tables and sizes of the eight child page tables. In some embodiments, the physical start addresses of the eight child page tables and the sizes of the eight child page tables may be sorted based on a sequence of virtual start addresses corresponding to the address translation units.

After receiving the address translation response packet, the PCIe device may establish a one-to-one mapping relationship from the first virtual storage space to physical storage space. For example, the virtual start address s_addr of the first virtual storage space corresponds to the physical start address p_addr0+STU of the page table. A virtual address s_addr+STU in the first virtual storage space corresponds to the physical address p_addr1 of the page table. A virtual address s_addr+3*STU in the first virtual storage space corresponds to the physical address p_addr2 of the page table. A virtual address s_addr+4*STU in the first virtual storage space corresponds to the physical address p_addr3 of the page table.

In some embodiments, as shown in FIG. 12a-1 and FIG. 12a-2, the PCIe device may first align the virtual start address of the first virtual storage space with the STU by using the following formula (3), and then send the address translation request packet to the processor, so that the processor may divide the first virtual storage space based on the smallest translation unit.

$$s\_addr=s\_addr\&(\sim(STU-1)) \tag{3}$$

In this embodiment, the processor may divide the first virtual storage space based on the smallest translation unit, to determine eight address translation request units. A virtual start address corresponding to a first address translation unit is s_addr, a virtual start address corresponding to a second address translation unit is s_addr+STU, a virtual start address corresponding to a third address translation unit is s_addr+2*STU, a virtual start address corresponding to a fourth address translation unit is s_addr+3*STU, a virtual start address corresponding to a fifth address translation unit is s_addr+4*STU, a virtual start address corresponding to a sixth address translation unit is s_addr+5*STU, a virtual start address corresponding to a seventh address translation unit is s_addr+6*STU, and a virtual start address corresponding to an eighth address translation unit is s_addr+7*STU. Then, the processor sets identifiers, namely, P0 to P7, of the eight address translation request units based on a virtual address sequence of the first virtual storage space. The processor may translate the eight address translation request units through page table walk, that is, determine child page tables corresponding to the eight address translation request units. In some embodiments, a page table corresponding to the address translation request unit may be determined by using formula (1), and then a child page table overlapping the page table corresponding to the address translation request unit is determined. For example, a child page table overlapping a page table corresponding to the first address translation request unit is determined based on formula (4).

$$trans\_addr=s\_addr\&(\sim(X1-1))+p\_addr0 \tag{4}$$

trans_addr represents a translated address. s_addr represents the virtual start address of the first virtual storage space. X1 represents a size of the first page table. p_addr0 represents the physical start address of the page table. The translated address is the same as a virtual start address of the address translation request unit. A translation size is one STU.

After the child page tables corresponding to the eight address translation request units are obtained, the processor sorts the physical start addresses of the eight child page tables and the sizes of the eight child page tables in a sequence of identifiers of the eight address translation request units, forms an address translation response packet, and returns the address translation response packet to a peer end.

In some embodiments, child page tables in virtual storage space corresponding to the eight address translation units may be determined in a manner of parallel processing based on the foregoing method. In some other embodiments, the processor does not uniformly divide the first virtual storage space into a plurality of address translation request units whose sizes are the STU to request the translated address, but performs serial processing on the first virtual storage space, that is, for a same ATS request, first attempts to request translation once to obtain a translation result, and determines whether all translation result address ranges requested by the PCIe device have been translated. If the translation result address ranges are not entirely translated, the processor continues to translate remaining untranslated address space. For a plurality of different ATS requests, the translation process described above is still performed in parallel. In other words, refer to the descriptions in the foregoing embodiment.

For example, as shown in FIG. 12b-1 and FIG. 12b-2, the processor first aligns the virtual start address of the first virtual storage space with the STU, and then determines a page table corresponding to the first virtual storage space. For example, a physical start address of a page table is p_addr, and a size of the page table is two STUs. Then, a child page table that is in the page table and that overlaps the first virtual storage space is determined based on the following formulas (5) to (9).

$$X=\min(X, U) \tag{5}$$

$$st\_ovl=s\_addr\&(X-1) \tag{6}$$

$$ovl\_size=X-st\_ovl \tag{7}$$

$$s\_addr=s\_addr+ovl\_size \tag{8}$$

$$U=U-ovl\_size \tag{9}$$

X represents the size of the page table. U represents a size of untranslated space in the first virtual storage space. min(a, b) is a smaller value of a and b. st_ovl is an offset, in physical address space corresponding to a current translation result, of overlapping space between the translation result and the first virtual storage space. In formula (6), & represents bitwise logical AND. ovl_size represents a size of space corresponding to a part overlapping the first virtual storage space.

Sizes of all the foregoing space are in units of STUs. Therefore, the foregoing logical operation may be performed when the virtual start address is aligned with the STU. In this way, a signal bit width participating in the operation are reduced. Because the STU is at least 4 KB, the bit width is reduced by at least 12 bits.

The processor determines, based on a first translation result, a size of overlapping space between the current translation result and the first virtual storage space (the size of the overlapping space needs to be a multiple of the STU), and performs a logical operation such as calculating a physical start address of the overlapping space. In addition, the overlapping space is segmented in units of STUs, and one or more translation results whose sizes are the STU are output, and are cached in sequence. The processor also calculates a size of currently untranslated address space, and if the size of the address space is not 0, the processor continues to initiate translation.

The processor performs the foregoing serial steps based on a second translation result and information such as a physical start address of virtual address space that is registered after previous processing, until U is finally 0, and finally obtains all translation results, forms an address translation response packet based on a protocol by using all the obtained translation results, and returns the address translation response packet to the PCIe device.

The processor may dynamically determine, based on values such as a current translation delay and a predicted average page table size (classification prediction is performed based on a request identifier in the address translation request packet), whether to perform parallel processing or serial processing for the address translation request. The processor may further dynamically choose, based on a translation delay threshold (for example, exceeding the threshold is considered as an excessively large translation delay), whether to perform parallel processing or serial processing for the address translation request or return some translation results to the PCIe device, so that the PCIe device can use the translation result as soon as possible and does not need to wait for excessively long time before there is an available translation result (for example, when a delay is excessively large, one translation result is directly returned to the PCIe device, so that a translation delay observed by the PCIe device may be relatively small because there is an available translation result in a relatively short period of time).

In some embodiments, as shown in FIG. 13, because the processor has not established a page table corresponding to the first virtual storage space, the processor cannot obtain the child page table corresponding to the address translation unit. In this case, the processor feeds back only obtained child page tables corresponding to the address translation units (for example, P0 to P2).

After receiving the address translation response packet, the PCIe device accesses, based on the physical start addresses of the eight child page tables and the sizes of the eight child page tables, physical storage space corresponding to the first virtual storage space. A physical address corresponding to the virtual address s_addr in the first virtual storage space is p_addr0+STU. A physical address corresponding to the virtual address s_addr+STU in the first virtual storage space is p_addr1. A physical address corresponding to the virtual address s_addr+3*STU in the first virtual storage space is p_addr2. A physical address corresponding to the virtual address s_addr+4*STU in the first virtual storage space is p_addr3.

In some embodiments, as shown in FIG. 14(a), the PCIe device first caches the physical start addresses of the eight child page tables and the sizes of the eight child page tables.

In some other embodiments, as shown in FIG. 14(b), the PCIe device merges the eight child page tables based on the physical start addresses of the eight child page tables and the sizes of the eight child page tables, to obtain four physical addresses and sizes of four page tables.

A method for merging child page tables is described below with reference to FIG. 15 to FIG. 17A and FIG. 17B by using examples. As shown in FIG. 15, the PCIe device may first store a physical start address of a first child page table and a size of the child page table to a cache (L_c), and update a merged address (m_addr) and a size of a merged page table. The merged address is a physical end address of the first child page table, and the physical end address of the first child page table is p_addr0+2*STU. The size of the merged page table is a size of one STU. It should be noted that L_c may be a part of a register, and a storage depth of L_c may be the physical start addresses of the eight child page tables and the sizes of the eight child page tables. Based on a PCIe protocol, the storage depth of L_c may be 16. Because a physical start address (p_addr1) of the second child page table is not equal to the merged address (p_addr0+2*STU), the physical start address of the first child page table and the size of the child page table that are in L_c are stored in the address translation cache, and the physical start address of the second child page table and a size of the child page table is stored in L_c. The merged address (m_addr) and the size of the merged page table are updated. The merged address is a physical end address of the second child page table, and the physical end address of the second child page table is p_addr1+1*STU. The size of the merged page table is a size of one STU. L_wr is used to indicate a location, in L_c, corresponding to the merged address and the size of the merged page table, that is, a value corresponding to the currently merged page table.

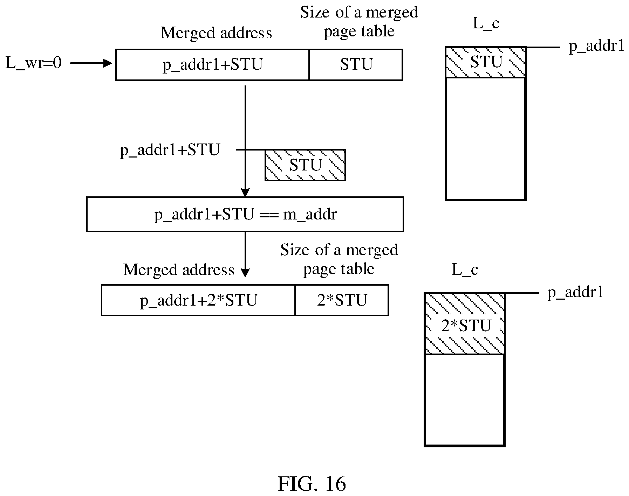

As shown in FIG. 16, because a physical start address (p_addr1+1*STU) of a third child page table is equal to the merged address (p_addr1+1*STU), an attribute of the third child page table is the same as an attribute of the merged page table, and a size of the third child page table is equal to the size of the merged page table, the physical start address of the third child page table and the size of the child page table are stored in L_c, and the second child page table and the third child page table are merged. The merged address (m_addr) and the size of the merged page table are updated. The merged address is a physical end address of the third child page table, and the physical end address of the third child page table is p_addr1+2*STU. The size of the merged page table is a size of two STUs. A physical start address of the merged page table is the physical start address (p_addr1) of the second child page table.

Because a physical start address (p_addr2) of a fourth child page table is not equal to the merged address (p_addr1+2*STU), the physical start address (p_addr1) of the merged page table and the size 2*STU of the merged page table that are in L_c are stored in the address translation cache, and the physical start address of the fourth child page table and a size of the child page table are stored in L_c. The merged address (m_addr) and the size of the merged page table are updated. The merged address is a physical end address p_addr2+1*STU of the fourth child page table. The size of the merged page table is a size of one STU.

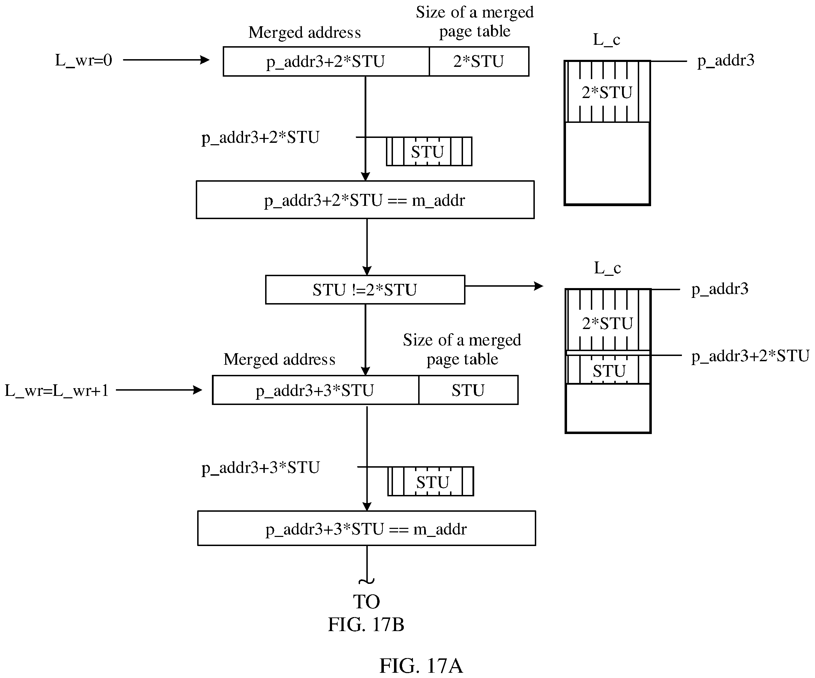

As shown in FIG. 17A and FIG. 17B, similarly, after a fifth child page table and a sixth child page table are merged, a merged address is a physical end address (p_addr3+2*STU) of the sixth child page table, and a size of a merged page table is a size of two STUs.

Because a physical start address (p_addr3+2*STU) of a seventh child page table is equal to the merged address (p_addr3+2*STU), an attribute of the seventh child page table is the same as an attribute of the merged page table, but a size of the seventh child page table is not equal to the size of the merged page table, the physical start address of the seventh child page table and the size of the child page table are first stored in L_c, and the seventh child page table is merged. The merged address (m_addr) and the size of the merged page table are updated. The merged address is a physical end address (p_addr3+3*STU) of the seventh child page table. The size of the merged page table is a size of one STU.

Because a physical start address (p_addr3+3*STU) of an eighth child page table is equal to the merged address (p_addr3+3*STU), an attribute of the eighth child page table is the same as an attribute of the merged page table, and a size of the eighth child page table equal to the size of the merged page table, the physical start address of the eighth child page table and the size of the child page table are stored in L_c, and the fifth child page table to the eighth child page table are merged. The merged address (m_addr) and the size of the merged page table are updated. The merged address is a physical end address (p_addr3+4*STU) of the eight child page table. The size of the merged page table is a size of four STUs. A physical start address of the merged page table is the physical start address (p_addr3) of the fifth child page table, and the size of the merged page table is 4*STU.

L_wr is used to indicate a location, in L_c, corresponding to the merged address and the size of the merged page table, that is, a value corresponding to the currently merged page table. For example, when a physical start address of a $j^{th}$ child page table (a current translation result) is the same as a value that is of a register of the merged page table and that is pointed to by L_wr, and it is determined that a size of the $j^{th}$ child page table is not equal to the value that is of the register of the merged page table and that is pointed to by L_wr, a physical end address of the $j^{th}$ child page table and the size of the child page table are cached in L_c, a value of L_wr is refreshed (for example, is added by 1), and the refreshed L_wr points to the physical end address of the $j^{th}$ child page table and the size of the $j^{th}$ child page table. When a physical start address of a $(j+1)^{th}$ child page table is the same as the value that is of the register of the merged page table and that is pointed to by L_wr, and it is determined that a size of the $(j+1)^{th}$ child page table is equal to the size of the $j^{th}$ child page table pointed to by the L_wr, the $j^{th}$ child page table and the $(j+1)^{th}$ child page table are merged, a value of L_wr is updated to L_wr-1, and L_wr points to the physical start address of the $j^{th}$ child page table and a size of a merged page table.

Therefore, through merging of the child page tables, storage space occupied to store information about the page tables is reduced, and utilization of the ATC and efficiency of address translation are improved.

In the address translation method provided in this embodiment of this application, for any address translation request, regardless of a quantity of page tables corresponding to virtual address space of the address translation request, and whether page table sizes are the same, the processor segments all translated physical address space overlapping (overlap) virtual address space into translation results whose sizes are all STUs, and returns the translation results to a PCIe peer end based on the PCIe protocol. Software and the PCIe device do not need to be adaptively changed, are compatible with all existing protocols and software architectures, and are compatible with all PCIe devices. All translation results can be returned without violating stipulation in a PCIe protocol standard.

In addition, when initiating an address translation request, the peer PCIe device does not need to consider whether page tables corresponding to virtual address space requested to translate are the same (otherwise, not all translation results can be returned). In this way, the PCIe device simply observes that virtual address space expected by the PCIe device to translate is continuous virtual address space obtained after a size of address space is added to a start address, and then initiates an address translation request. In this way, the peer PCIe device can be simplified when implementing an address translation request function.

It may be understood that, to implement functions in the foregoing embodiments, the processor and the PCIe device include corresponding hardware structures and/or software modules for performing the functions. A person of ordinary skill in the art should easily be aware that, in combination with the examples described in embodiments disclosed in this application, units, algorithm steps may be implemented by hardware or a combination of hardware and computer software. Whether a function is performed by hardware or hardware driven by computer software depends on particular applications and design constraints of the technical solutions.

In embodiments of this application, unless otherwise stated or there is a logic conflict, terms and/or descriptions between different embodiments are consistent and may be mutually referenced, and technical features in the different embodiments may be merged based on an internal logical relationship thereof, to form a new embodiment.

In this application, "at least one" means one or more, and "a plurality of" means at least two. The term "and/or" describes an association relationship for describing associated objects and represents that three relationships may exist. For example, A and/or B may represent the following cases: Only A exists, both A and B exist, and only B exists, where A and B may be in a singular or plural form. The symbol "/" in the text description of this application generally represents an "or" relationship between associated objects. In a formula of this application, the symbol "/" indicates a "division" relationship between associated objects.

It may be understood that numerical numbers involved in embodiments of this application are differentiated merely for ease of description, but are not used to limit the scope of embodiments of this application. The sequence numbers of the foregoing processes do not mean an execution sequence, and the execution sequence of the processes should be determined according to functions and internal logic of the processes.

**Claims**

1. An address translation apparatus, comprising:

    an interface, configured to receive one address translation request packet from a PCIe device, wherein the address translation request packet comprises a first virtual address and a size of first virtual storage space, and the first virtual address is a virtual start address of the first virtual storage space; and
    an address translation unit, configured to determine P child page tables of a same size based on the first virtual storage space, wherein each child page table is used to indicate a mapping relationship from a virtual address to a physical address, a sum of sizes of the P child page tables is equal to the size of the first virtual storage space, P is an integer, and P≥1, wherein
    the interface is further configured to send one address translation response packet to the PCIe device, wherein the address translation response packet comprises physical start addresses of the P child page tables and the sizes of the P child page tables.

2. The apparatus according to claim 1, wherein the address translation unit is configured to:
    determine the P child page tables of a same size based on the first virtual storage space and a smallest translation unit.

3. The apparatus according to claim 2, wherein the address translation unit is configured to:

    determine N page tables based on the first virtual address, wherein the first virtual storage space at least partially overlaps virtual storage space indicated by each of the N page tables, N is an integer, and N≥1;
    divide the N page tables based on the smallest translation unit, to obtain M child page tables, wherein all the M child page tables are the same in size, M is an integer, M≥1, and the first virtual storage space comprises at least one smallest translation unit; and
    determine the P child page tables from the M child page tables, wherein $1 \leq P \leq M$.

4. The apparatus according to claim 3, wherein the address translation unit is configured to:
    determine, based on the first virtual address and a size of the page table, N page tables overlapping the first virtual storage space.

5. The apparatus according to claim 4, wherein a part that is of virtual storage space indicated by an $i^{th}$ page table and that overlaps the first virtual storage space is represented by using the following formula:

$$(\text{p\_addr}+(\text{s\_addr}+D*\text{STU})-\text{v\_addr}) \text{ to } (\text{p\_addr}+\min(Xi, U)),$$

wherein
p_addr represents a physical start address of the $i^{th}$ page table, s_addr represents the first virtual address, D represents a quantity of smallest translation units comprised in a part that is of a first page table to an $(i-1)^{th}$ page table and that overlaps the first virtual storage space, STU represents the smallest translation unit, v_addr represents a virtual start address of the $i^{th}$ page table, Xi represents a size of the $i^{th}$ page table, U represents a size of untranslated space in the first virtual storage space, i is an integer, and $i \in [1, N]$.

6. The apparatus according to any one of claims 1 to 5, wherein the physical start addresses of the P child page tables comprised in one address translation response packet are sorted.

7. The apparatus according to any one of claims 1 to 6, wherein an attribute of a child page table is the same as an attribute of a page table to which the child page table belongs, and the attribute of the child page table or the page table comprises an attribute, in a system, of memory space indicated by the child page table or the page table.

8. An address translation method, comprising:

receiving one address translation request packet, wherein the address translation request packet comprises a first virtual address and a size of first virtual storage space, and the first virtual address is a virtual start address of the first virtual storage space;
determining P child page tables of a same size based on the first virtual storage space, wherein each child page table is used to indicate a mapping relationship from a virtual address to a physical address, a sum of sizes of the P child page tables is equal to the size of the first virtual storage space, P is an integer, and $P \geq 1$; and
sending one address translation response packet, wherein the address translation response packet comprises physical start address of the P child page tables and the sizes of the P child page tables.

9. The method according to claim 8, wherein the determining P child page tables of a same size based on the first virtual storage space comprises:
determining the P child page tables of a same size based on the first virtual storage space and a smallest translation unit.

10. The method according to claim 9, wherein the determining the P child page tables of a same size based on the first virtual storage space and a smallest translation unit comprises:

determining N page tables based on the first virtual address, wherein the first virtual storage space at least partially overlaps virtual storage space indicated by each of the N page tables, N is an integer, and $N \geq 1$;
dividing the N page tables based on the smallest translation unit, to obtain M child page tables, wherein all the M child page tables are the same in size, M is an integer, $M \geq 1$, and the first virtual storage space comprises at least one smallest translation unit; and
determining the P child page tables from the M child page tables, wherein $1 \leq P \leq M$.

11. The method according to claim 10, wherein the determining N page tables based on the first virtual address comprises:
determining, based on the first virtual address and a size of the page table, N page tables overlapping the first virtual storage space.

12. The method according to claim 11, wherein a part that is of virtual storage space indicated by an $i^{th}$ page table and that overlaps the first virtual storage space is represented by using the following formula:

$$(\text{p\_addr}+(\text{s\_addr}+D*\text{STU})-\text{v\_addr}) \text{ to } (\text{p\_addr}+\min(Xi, U)),$$

wherein
p_addr represents a physical start address of the $i^{th}$ page table, s_addr represents the first virtual address, D represents a quantity of smallest translation units comprised in a part that is of a first page table to an $(i-1)^{th}$ page table and that overlaps the first virtual storage space, STU represents the smallest translation unit, v_addr represents a virtual start address of the $i^{th}$ page table, Xi represents a size of the $i^{th}$ page table, U represents a size of untranslated space in the first virtual storage space, i is an integer, and i∈[1, N].

13. The method according to any one of claims 8 to 12, wherein the physical start addresses of the P child page tables comprised in one address translation response packet are sorted.

14. The method according to any one of claims 8 to 13, wherein an attribute of a child page table is the same as an attribute of a page table to which the child page table belongs, and the attribute of the child page table or the page table comprises an attribute, in a system, of memory space indicated by the child page table or the page table.

PCIe device    Processor

First virtual storage space

Page table

Page table

Page table

Page table

Page table

Page table

FIG. 1

FIG. 2

PCIe system 300

Processor
301

304
Endpoint
307

302
Root complex

306
Memory

305
Bridge

304
Endpoint

303
Switch

304
Endpoint

304
Endpoint

304
Endpoint

FIG. 3

Processor 301

Address translation circuit 411

Address translation unit 4111

Interface 4112

PCIe device 304

FIG. 4

FIG. 5

| PCIe device | | Processor |
|---|---|---|

S501: Send one address translation request packet

S502: Receive one address translation request packet

S503

S5031: Determine N page tables based on a first virtual address

S5032: Divide the N page tables based on a smallest translation unit, to obtain M child page tables

S5033: Determine P child page tables from the M child page tables

S504: Send one address translation response packet

S505: Receive one address translation response packet

S506: Access, based on physical start addresses of the P child page tables and sizes of the P child page tables, physical storage space corresponding to the first virtual storage space

FIG. 6

FIG. 7

PCIe device

Processor

S501: Send one address
translation request packet

S502: Receive one address
translation request packet

S503

S5031

S5031a: Determine a second virtual
address based on a first virtual address
and a size of an $i^{th}$ page table

S5031b

Determine
whether the second
virtual address is the same
as a virtual start address
of the $i^{th}$ page
table

No

Yes

S5031c: Determine that first virtual
storage space at least partially
overlaps virtual storage space
indicated by the $i^{th}$ page table

S5031d: Determine that the first
virtual storage space does not
overlap the virtual storage space
indicated by the $i^{th}$ page table at all

TO
FIG. 8B

TO
FIG. 8B

TO
FIG. 8B

TO
FIG. 8B

FIG. 8A

CONT. CONT.          CONT.          CONT.
FROM FROM          FROM          FROM
FIG. 8A FIG. 8A          FIG. 8A          FIG. 8A

S5032: Divide N page tables based on a smallest translation unit, to obtain M child page tables

S5033: Determine P child page tables from the M child page tables

S504: Send one address translation response packet

S505: Receive one address translation response packet

S506: Access, based on physical start addresses of the P child page tables and sizes of the P child page tables, physical storage space corresponding to the first virtual storage space

S507: Store the physical start addresses of the P child page tables and the sizes of the P child page tables

S508: Merge the P child page tables based on the physical start addresses of the P child page tables and the sizes of the P child page tables, to obtain physical start addresses of the N page tables and sizes of the N page tables

S509: Store the physical start addresses of the N page tables and the sizes of the N page tables

FIG. 8B

Page table

v_addr ——————— STU ——————— p_addr

v_addr+1*STU ——————— STU ——————— p_addr+1*STU

v_addr+2*STU ——————— STU ——————— p_addr+2*STU

v_addr+3*STU ——————— STU ——————— p_addr+3*STU

STU

FIG. 9

S1001

Determine whether
a physical start address of an $j^{th}$
child page table is equal to a
merged address

No

S1002: Cache the physical start
address of the $j^{th}$ child page table
and a size of the $j^{th}$ child page table

Yes

S1003

No

Determine whether an
attribute of the $j^{th}$ child page table
is the same as an attribute of a
merged page table

Yes

S1004

Determine whether
the size of the $j^{th}$ child page
table is the same as a size of
the merged page table

No

Yes

S1005: Cache a physical end address
of the $j^{th}$ child page table and the
size of the $j^{th}$ child page table

S1006: Merge the $j^{th}$ child
page table with the merged
page table

FIG. 10

PCIe device

Processor

s_addr

8*STU

STU

STU

...

p_addr0

2*STU

p_addr1

2*STU

p_addr2

1*STU

p_addr3

4*STU

p_addr0+STU

STU

p_addr1

STU

p_addr1+STU

STU

p_addr2

STU

p_addr3

STU

p_addr3+STU

STU

p_addr3+2*STU

STU

p_addr3+3*STU

STU

s_addr

STU

s_addr+STU

2*STU

s_addr+3*STU

STU

s_addr+4*STU

4*STU

p_addr0+STU

p_addr1

p_addr2

p_addr3

FIG. 11

PCIe device

ATS

s_addr

8*STU

s_addr=s_addr&(~(STU−1))

8*STU

ATS

s_addr

STU

STU

Processor

s_addr

STU

PTW0

s_addr+STU

STU

PTW1

s_addr+2*STU

STU

PTW2

...

s_addr+7*STU

STU

PTW7

TO
FIG. 12a-2

FIG. 12a-1

FIG. 12a-2

EP 4 036 741 A1

PCIe device

ATS

s_addr

8xSTU

s_addr=s_addr&(~(STU−1))

X=8*STU

s_addr ⎯⎯ PTW0 ➜

p_addr0

P0

X=2*STU

s_addr ⟶

X=min(X, U)
st_ovl=s_addr&(X−1)
ovl_size=X−st_ovl
s_addr=s_addr+ovl_size
U=U−ovl_size

⟶ P0 ⎯ p_addr0+STU

U !=0

TO
FIG. 12b-2

FIG. 12b-1

EP 4 036 741 A1

32

p_addr1

P0

PTW0          s_addr

X=2*STU

p_addr0+STU          P0

p_addr1          P1

p_addr1+STU          P2

p_addr2          P3

p_addr3          P4

p_addr3+STU          P5

p_addr3+2*STU          P6

p_addr3+3*STU          P7

U = 0

...

$X=\min(X, U)$
$st\_ovl=s\_addr\&(X-1)$
$ovl\_size=X-st\_ovl$
$s\_addr=s\_addr+ovl\_size$
$U=U-ovl\_size$

s_addr

P0

P1

P2

P3

P4

P5

P6

P7

FIG. 12b-2

EP 4 036 741 A1

s_addr

STU — PTW0 →

s_addr+1*STU

STU — PTW1 →

s_addr+2*STU

STU — PTW2 →

...

s_addr+7*STU

STU — PTW7 →

PTW2
fails

P0

P1

P2

P3

P4

P0

P1

P5

P2

P6

P7

FIG. 13

PCIe device

Translation result

Address translation cache

p_addr0+STU — STU

s_addr

STU

p_addr1 — STU

STU

p_addr1+STU — STU

STU

p_addr2 — STU

STU

p_addr3 — STU

STU

p_addr3+STU — STU

STU

p_addr3+2*STU — STU

STU

p_addr3+3*STU — STU

s_addr+8*STU

STU

FIG. 14(a)

Translation result

Address
translation cache

p_addr0+STU —— [/ STU /]

p_addr1 —— [\ STU \]
p_addr1+STU —— [\ STU \]

p_addr2 —— [⊠ STU ⊠]

p_addr3 ——
[| STU |]
p_addr3+STU —— [| STU |]
p_addr3+2*STU —— [| STU |]
p_addr3+3*STU —— [| STU |]

s_addr

s_addr+8*STU

[/ STU /]

[\ 2*STU \]

[⊠ STU ⊠]

[|||| 4*STU ||||]

FIG. 14(b)

FIG. 15

EP 4 036 741 A1

Size of a merged
page table

L_c

Merged address

L_wr=0 ⟶  | p_addr1+STU | STU |

STU ⟍⟍ — p_addr1

p_addr1+STU — | STU |

| p_addr1+STU == m_addr |

Merged address

Size of a merged
page table

L_c

| p_addr1+2*STU | 2*STU |

2*STU — p_addr1

FIG. 16

TO
FIG. 17B

FIG. 17A

CONT.
FROM
FIG. 17A

1*STU ==Size of a merged page table

L_wr !=0

L_wr=0

Merged address

p_addr3+4*STU

Size of a merged page table

4*STU

L_c

2*STU

2*STU

p_addr3

p_addr3+2*STU

L_c

4*STU

p_addr3

FIG. 17B

## INTERNATIONAL SEARCH REPORT

International application No.

**PCT/CN2019/111777**

**A.    CLASSIFICATION OF SUBJECT MATTER**

H04L 12/749(2013.01)i

According to International Patent Classification (IPC) or to both national classification and IPC

**B.    FIELDS SEARCHED**

Minimum documentation searched (classification system followed by classification symbols)

H04L

Documentation searched other than minimum documentation to the extent that such documents are included in the fields searched

Electronic data base consulted during the international search (name of data base and, where practicable, search terms used)

CNABS, CNTXT, CNKI, VEN, DWPI: 地址, 翻译, 虚拟地址, 物理地址, 映射, 页表, 划分, 大小, 相同, 相等, 一致, 请求, 响应, 最小翻译单元, PCIe, STU, address+, translat+, virtual address, physical address, map, size, request, response, page table

**C.    DOCUMENTS CONSIDERED TO BE RELEVANT**

| Category* | Citation of document, with indication, where appropriate, of the relevant passages | Relevant to claim No. |
|---|---|---|
| A | CN 104508641 A (QUALCOMM INC.) 08 April 2015 (2015-04-08) <br> entire document | 1-14 |
| A | CN 103116555 A (NATIONAL UNIVERSITY OF DEFENSE TECHNOLOGY) 22 May 2013 (2013-05-22) <br> entire document | 1-14 |
| A | US 2005283602 A1 (VEMBU BALAJI et al.) 22 December 2005 (2005-12-22) <br> entire document | 1-14 |
| A | US 2011047261 A1 (PANASONIC CORPORATION) 24 February 2011 (2011-02-24) <br> entire document | 1-14 |

☐ Further documents are listed in the continuation of Box C.        ☑ See patent family annex.

| | |
|---|---|
| *    Special categories of cited documents: <br> "A"    document defining the general state of the art which is not considered to be of particular relevance <br> "E"    earlier application or patent but published on or after the international filing date <br> "L"    document which may throw doubts on priority claim(s) or which is cited to establish the publication date of another citation or other special reason (as specified) <br> "O"    document referring to an oral disclosure, use, exhibition or other means <br> "P"    document published prior to the international filing date but later than the priority date claimed | "T"    later document published after the international filing date or priority date and not in conflict with the application but cited to understand the principle or theory underlying the invention <br> "X"    document of particular relevance; the claimed invention cannot be considered novel or cannot be considered to involve an inventive step when the document is taken alone <br> "Y"    document of particular relevance; the claimed invention cannot be considered to involve an inventive step when the document is combined with one or more other such documents, such combination being obvious to a person skilled in the art <br> "&"    document member of the same patent family |

| Date of the actual completion of the international search | Date of mailing of the international search report |
|---|---|
| **23 June 2020** | **30 June 2020** |

| Name and mailing address of the ISA/CN | Authorized officer |
|---|---|
| **China National Intellectual Property Administration (ISA/ CN)** <br> **No. 6, Xitucheng Road, Jimenqiao Haidian District, Beijing 100088** <br> **China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2019/111777**

| Patent document cited in search report | | | Publication date (day/month/year) | Patent family member(s) | | | Publication date (day/month/year) |
|---|---|---|---|---|---|---|---|
| CN | 104508641 | A | 08 April 2015 | JP | 2019109906 | A | 04 July 2019 |
| | | | | US | 8938602 | B2 | 20 January 2015 |
| | | | | KR | 102051698 | B1 | 03 December 2019 |
| | | | | JP | 2015527661 | A | 17 September 2015 |
| | | | | EP | 2880540 | A1 | 10 June 2015 |
| | | | | KR | 20150038513 | A | 08 April 2015 |
| | | | | US | 2014040593 | A1 | 06 February 2014 |
| | | | | JP | 2018041485 | A | 15 March 2018 |
| | | | | BR | 112015001988 | A2 | 04 July 2017 |
| | | | | WO | 2014022110 | A1 | 06 February 2014 |
| | | | | EP | 2880540 | B1 | 25 September 2019 |
| CN | 103116555 | A | 22 May 2013 | CN | 103116555 | B | 05 March 2014 |
| US | 2005283602 | A1 | 22 December 2005 | | None | | |
| US | 2011047261 | A1 | 24 February 2011 | WO | 2008044432 | A1 | 17 April 2008 |
| | | | | JP | 2008098813 | A | 24 April 2008 |

Form PCT/ISA/210 (patent family annex) (January 2015)

42